# EUROPEAN PATENT APPLICATION

(11) **EP 4 338 623 A1**
(43) Date of publication of application: **20.03.2024**
(21) Application number: 22807093.4
(22) Date of filing: 28.02.2022
(51) Int. Cl.: A24F 40/51, A24F 40/40, A24F 40/46

(54) **POWER SUPPLY UNIT FOR AEROSOL GENERATION DEVICE**

(30) Priority: 10.05.2021 JP 2021079896
(71) Applicant: Japan Tobacco, Inc., Tokyo, 105-6927 (JP)
(72) Inventor: AOYAMA, Tatsunari, Tokyo 130-8603 (JP); INOUE, Yasunobu, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP); MASUDA, Yuki, Tokyo 130-8603 (JP); YOSHIDA, Ryo, Tokyo 130-8603 (JP)
(74) Representative: Hoffmann Eitle
(86) International application number: PCT/JP2022/008374
(87) International publication number: WO 2022/239386

(57) **Abstract**

A non-combustion inhaler (100) includes a power supply BAT, a heater connector Cn, a power supply thermistor T1, a puff thermistor T2, a heater thermistor T3, a case thermistor T4, a power supply temperature detecting connector (234), a suction detecting connector (230), a heater temperature detecting connector (240), a case temperature detecting connector (228), an MCU-mounted board (161), and a receptacle-mounted board (162). Of the MCU-mounted board (161) and the receptacle-mounted board (162), the heater connector Cn is disposed on the receptacle-mounted board (162). A count of thermistor connectors that are disposed on the MCU-mounted board (161) is greater than a count of thermistor connectors that are disposed on the receptacle-mounted board (162).

## Description

### TECHNICAL FIELD

The present invention relates to a power supply unit for an aerosol generating device.

### BACKGROUND ART

Patent Literatures 1 and 2 disclose a power supply unit for an aerosol generating device which can grasp a state of a device from a thermistor provided in a housing. From a viewpoint of accuracy improvement, the thermistor is preferably disposed as close as possible to a measurement target. Therefore, the thermistor is connected to a circuit board via a wiring and a connector. On the other hand, with higher functionality of aerosol generating devices, a plurality of circuit boards may be provided in the device.

### CITATION LIST

### PATENT LITERATURE

Patent Literature 1: JP2020-520233A
Patent Literature 2: JP2019-071897A

### SUMMARY OF INVENTION

### TECHNICAL PROBLEM

However, in a case where a plurality of circuit boards are provided in a device, how to dispose a connector for a thermistor for the plurality of circuit boards has not been sufficiently studied.

The present invention provides a power supply unit for an aerosol generating device in which a connector for a thermistor is appropriately disposed for a plurality of circuit boards.

### SOLUTION TO PROBLEM

A power supply unit for an aerosol generating device of the present invention, includes:
a power supply;
a heater connector connected to a heater configured to heat an aerosol source by consuming power supplied from the power supply;
thermistors;
thermistor connectors connected to the thermistors;
a first circuit board; and
a second circuit board separate from the first circuit board, in which:
   the heater connector is disposed on the second circuit board of the first circuit board and the second circuit board; and
   the number of the thermistor connectors disposed on the first circuit board is larger than the number of the thermistor connectors disposed on the second circuit board.

### ADVANTAGEOUS EFFECTS OF INVENTION

According to the present invention, a connector for a thermistor can be appropriately disposed for a plurality of circuit boards, and detection accuracy of the thermistor can be improved.

### BRIEF DESCRIPTION OF DRAWINGS

[Fig. 1] Fig. 1 is a perspective view of a non-combustion inhaler.
[Fig. 2] Fig. 2 is a perspective view of the non-combustion inhaler with a rod attached.
[Fig. 3] Fig. 3 is another perspective view of the non-combustion inhaler.
[Fig. 4] Fig. 4 is an exploded perspective view of the non-combustion inhaler.
[Fig. 5] Fig. 5 is a perspective view of an internal unit of the non-combustion inhaler.
[Fig. 6] Fig. 6 is an exploded perspective view of the internal unit in Fig. 5.
[Fig. 7] Fig. 7 is a perspective view of the internal unit with a power supply and a chassis removed.
[Fig. 8] Fig. 8 is another perspective view of the internal unit with the power supply and the chassis removed.
[Fig. 9] Fig. 9 is a schematic diagram for illustrating operation modes of the inhaler.
[Fig. 10] Fig. 10 is a diagram illustrating a schematic configuration of an electric circuit of the internal unit.
[Fig. 11] Fig. 11 is a diagram for illustrating an operation of the electric circuit in a sleep mode.
[Fig. 12] Fig. 12 is a diagram for illustrating an operation of the electric circuit in an active mode.
[Fig. 13] Fig. 13 is a diagram for illustrating an operation of the electric circuit in a heating initial setting mode.
[Fig. 14] Fig. 14 is a diagram for illustrating an operation of the electric circuit at the time of heating the heater in a heating mode.
[Fig. 15] Fig. 15 is a diagram for illustrating an operation of the electric circuit at the time of detecting a temperature of the heater in the heating mode.
[Fig. 16] Fig. 16 is a diagram for illustrating an operation of the electric circuit in a charging mode.
[Fig. 17] Fig. 17 is a view illustrating a main surface of a receptacle-mounted board.
[Fig. 18] Fig. 18 is a view illustrating a secondary surface of the receptacle-mounted board.
[Fig. 19] Fig. 19 is a view illustrating a main surface of an MCU-mounted board.
[Fig. 20] Fig. 20 is a view illustrating a secondary surface of the MCU-mounted board.
[Fig. 21] Fig. 21 is a cross-sectional view of the non-combustion inhaler taken along a horizontal plane passing through a thermistor disposed in the vicinity of the heater.
[Fig. 22] Fig. 22 is a cross-sectional view of the non-combustion inhaler taken along a virtual plane indicated by A-A in Fig. 21.

### DESCRIPTION OF EMBODIMENTS

Hereinafter, an inhalation system which is an embodiment of an aerosol generating device according to the present invention will be described with reference to the drawings. The inhaling system includes a non-combustion inhaler 100 (hereinafter, also simply referred to as "inhaler 100") which is an embodiment of a power supply unit according to the present invention, and a rod 500 heated by the inhaler 100. In the following description, a configuration in which the inhaler 100 accommodates a heating unit in an undetachable manner will be described as an example. However, the heating unit may be attachable to and detachable from the inhaler 100. For example, the rod 500 and the heating unit may be integrated and attachable to and detachable from the inhaler 100. That is, the power supply unit for the aerosol generating device may not include the heating unit as a component. The term "undetachable" refers to an aspect in which detachment cannot be performed as long as in an assumed application. Alternatively, an induction heating coil provided in the inhaler 100 and a susceptor built in the rod 500 may cooperate to constitute the heating unit.

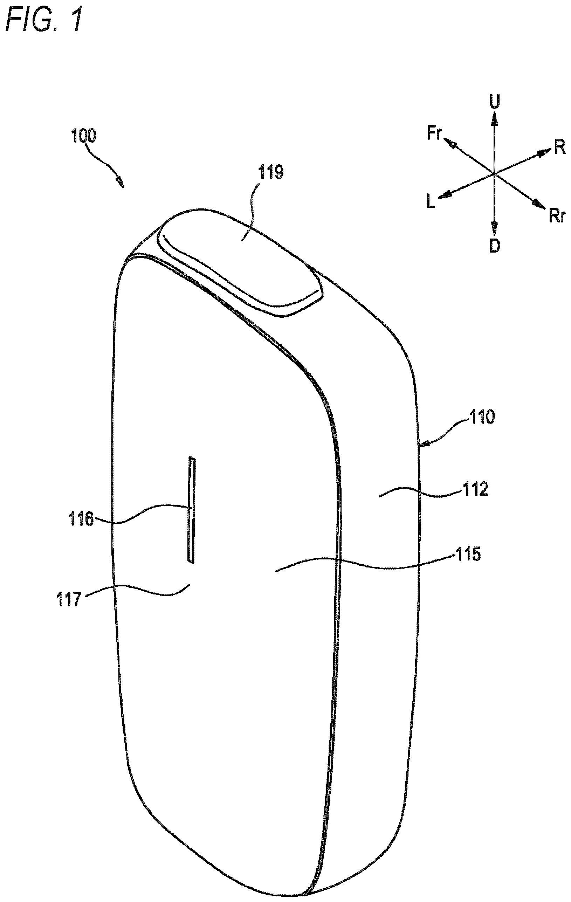

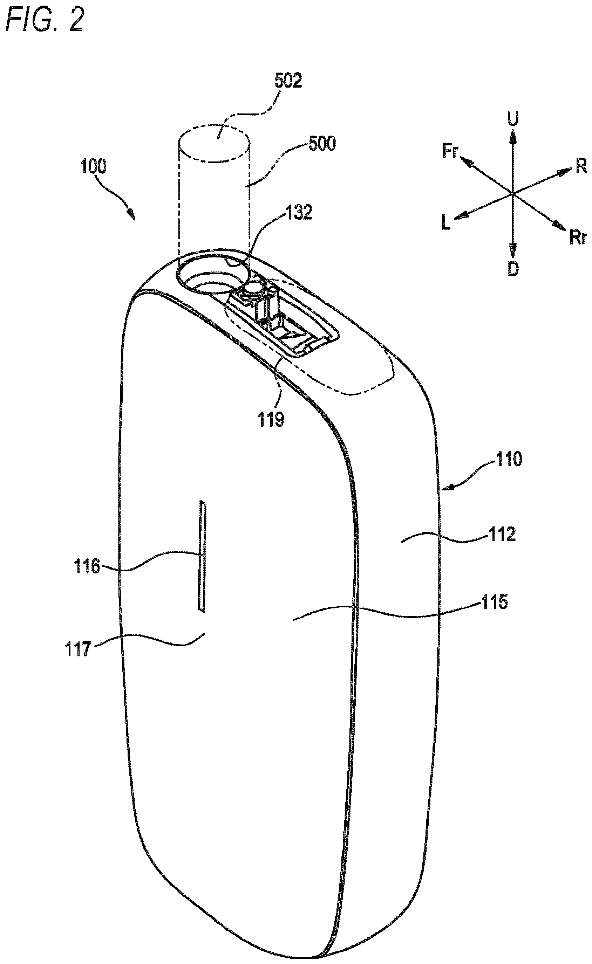

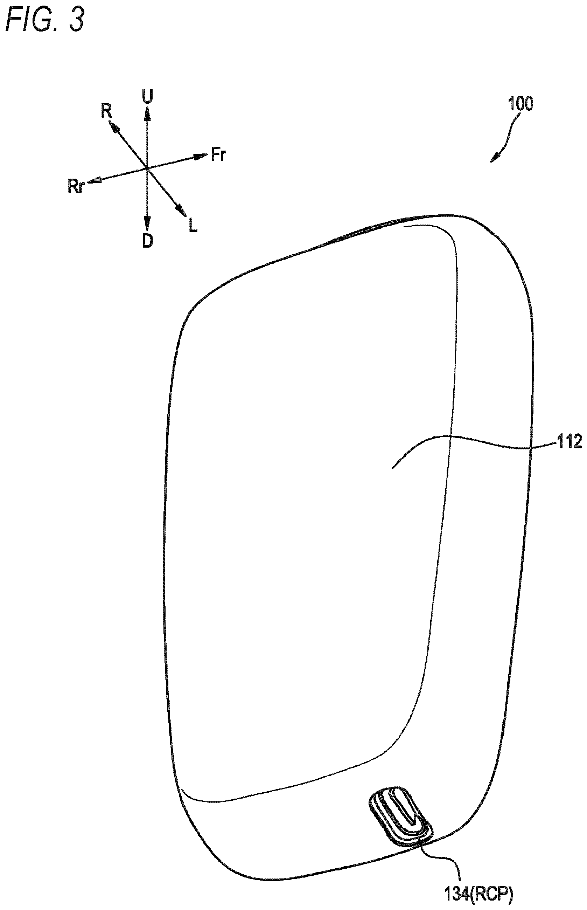

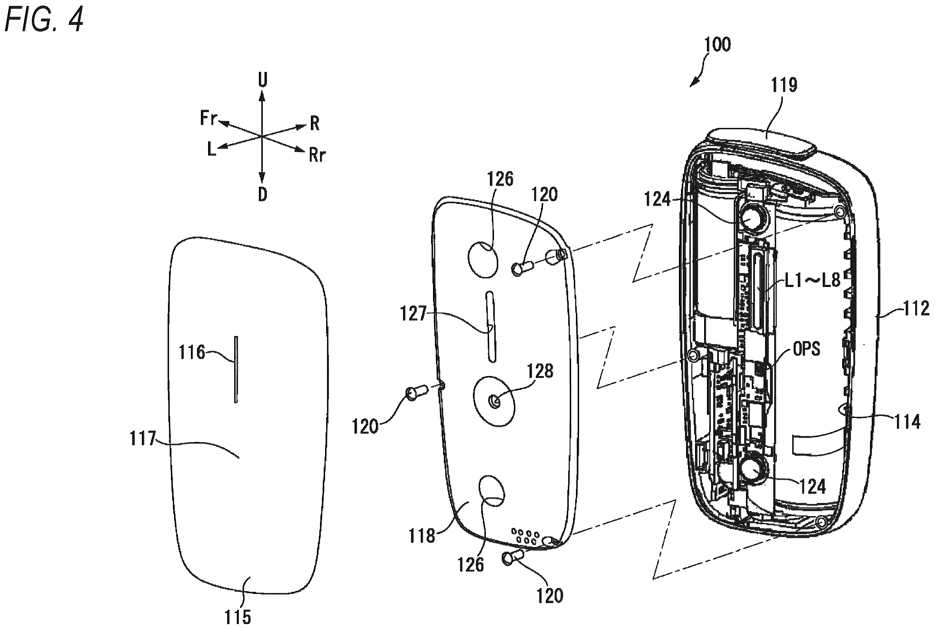

Fig. 1 is a perspective view illustrating an overall configuration of the inhaler 100. Fig. 2 is a perspective view of the inhaler 100 with the rod 500 attached. Fig. 3 is another perspective view of the inhaler 100. Fig. 4 is an exploded perspective view of the inhaler 100. In addition, in the following description, for convenience, an orthogonal coordinate system in a three-dimensional space in which three directions orthogonal to one another are defined as a front-rear direction, a left-right direction, and an up-down direction will be described. In the drawings, a front side is denoted by Fr, a rear side is denoted by Rr, a right side is denoted by R, a left side is denoted by L, an upper side is denoted by U, and a lower side is denoted by D.

The inhaler 100 is configured to generate an aerosol containing a flavor by heating the rod 500 which is elongated and substantially columnar (see Fig. 2) as an example of a flavor component generation base material having a filler containing an aerosol source and a flavor source.

### <Flavor Component Generation Base Material (Rod)>

The rod 500 includes a filler containing an aerosol source which is heated at a predetermined temperature to generate aerosol.

The type of the aerosol source is not particularly limited, and an extract substance from various natural products and/or a constituent component thereof can be selected according to a purpose. The aerosol source may be a solid, or may be, for example, a polyhydric alcohol such as glycerin or propylene glycol, or a liquid such as water. The aerosol source may include a flavor source such as a tobacco raw material which releases a flavor component by heating, or an extract originated from a tobacco raw material. The gas to which the flavor component is added is not limited to the aerosol, and for example, invisible steam may be generated.

The filler of the rod 500 may contain cut tobacco as the flavor source. A material of the cut tobacco is not specifically limited, and publicly known material such as a lamina and a stem may be used as the material. The filling article may contain one kind or two or more kinds of flavors. The kinds of flavors are not specifically limited, however, in view of provision of satisfactory smoke flavor, a flavor is menthol, preferably. The flavor source may contain plants other than tobacco(for example, mints, herbal medicines, or herbs). The rod 500 may not contain a flavor source depending on the purpose.

### <Overall Configuration of Non-combustion Inhaler>

Next, an overall configuration of the inhaler 100 will be described with reference to Figs. 1 to 4.

The inhaler 100 includes a substantially rectangular case 110 having a front surface, a rear surface, a left surface, a right surface, an upper surface, and a lower surface. The case 110 includes a bottomed tubular case main body 112 in which the front surface, the rear surface, the upper surface, the lower surface, and the right surface are integrally formed, an outer panel 115 and an inner panel 118 which seal an opening portion 114 (see Fig. 4) of the case main body 112 and constitute the left surface, and a slider 119.

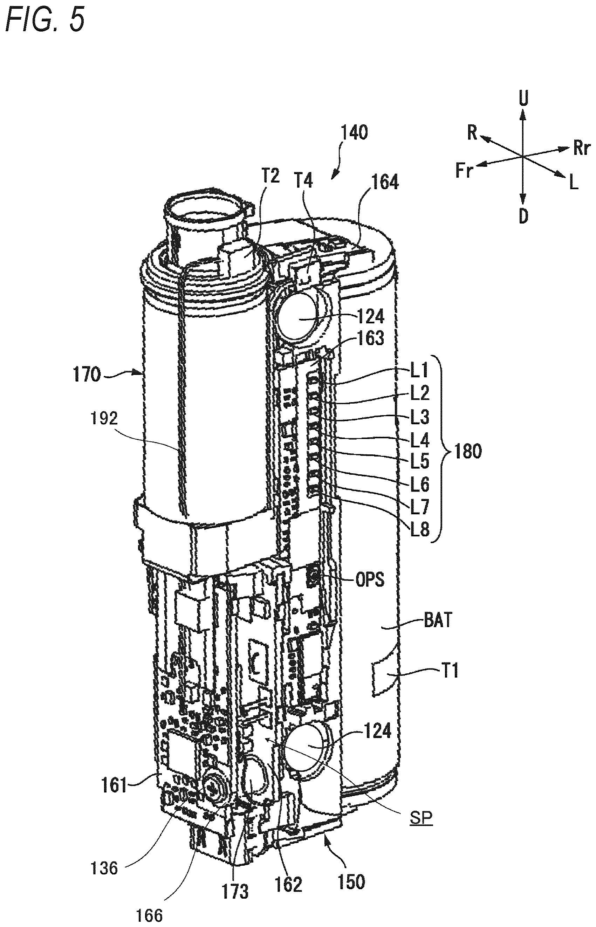

The inner panel 118 is fixed to the case main body 112 by bolts 120. The outer panel 115 is fixed to the case main body 112 by magnets 124 held by a chassis 150 (see Fig. 5) to be described later accommodated in the case main body 112, so as to cover an outer surface of the inner panel 118. The outer panel 115 is fixed by the magnets 124, so that a user may replace the outer panel 115 as desired.

The inner panel 118 is provided with two through holes 126 through which the magnets 124 pass. The inner panel 118 is further provided with a vertically long hole 127 and a circular round hole 128 between the two through holes 126 disposed vertically. The long hole 127 is used to transmit light emitted from eight light emitting diodes (LEDs) L1 to L8 built in the case main body 112. A button-type operation switch OPS built in the case main body 112 passes through the round hole 128. Accordingly, the user can detect the light emitted from the eight LEDs L1 to L8 through a LED window 116 of the outer panel 115. In addition, the user can press down the operation switch OPS via a pressing portion 117 of the outer panel 115.

As illustrated in Fig. 2, an opening 132 into which the rod 500 may be inserted is provided in the upper surface of the case main body 112. The slider 119 is coupled to the case main body 112 between a position where the opening 132 is closed (see Fig. 1) and a position where the opening 132 is opened (see Fig. 2), so as to be movable in the front-rear direction. It should be noted that in Fig. 2, in order to facilitate understanding, the slider 119 is made transparent, and only an outer shape of the slider 119 is indicated by a two-dot chain line.

The operation switch OPS is used to perform various operations of the inhaler 100. For example, the user operates the operation switch OPS via the pressing portion 117 in a state where the rod 500 is inserted into the opening 132 and mounted as illustrated in Fig. 2. Accordingly, the rod 500 is heated by the heating unit 170 (see Fig. 5) without combustion. In a case where the rod 500 is heated, aerosol is generated from the aerosol source contained in the rod 500, and the flavor of the flavor source contained in the rod 500 is added to the aerosol. The user can inhale the aerosol containing the flavor by holding in the mouth an inhaling port 502 of the rod 500 protruding from the opening 132 to perform inhaling.

As illustrated in Fig. 3, a charging terminal 134 which is electrically connected to an external power supply such as an outlet or a mobile battery and receives supply of power is provided on the lower surface of the case main body 112. In the present embodiment, the charging terminal 134 is a universal serial bus (USB) Type-C receptacle, but is not limited thereto. The charging terminal 134 is hereinafter also referred to as a receptacle RCP.

The charging terminal 134 may include, for example, a power receiving coil, and may receive power transmitted from the external power supply in a non-contact manner. A method of wireless power transfer in this case may be an electromagnetic induction type, a magnetic resonance type, or a combination of the electromagnetic induction type and the magnetic resonance type. As another example, the charging terminal 134 may be connectable to various USB terminals or the like, and may include the above-described power receiving coil.

A configuration of the inhaler 100 illustrated in Figs. 1 to 4 is merely an example. The inhaler 100 can be configured in various forms in which the rod 500 is held and applied with an action such as heating to generate a gas to which a flavor component is added from the rod 500, and a user can inhale the generated gas.

### <Internal Configuration of Non-combustion Inhaler>

An internal unit 140 of the inhaler 100 will be described with reference to Figs. 5 to 8.

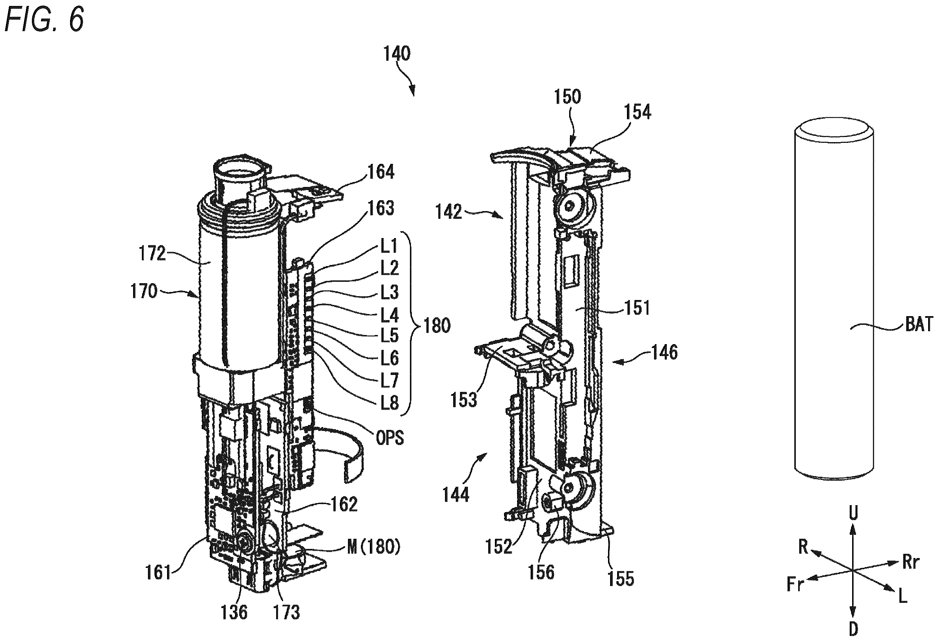

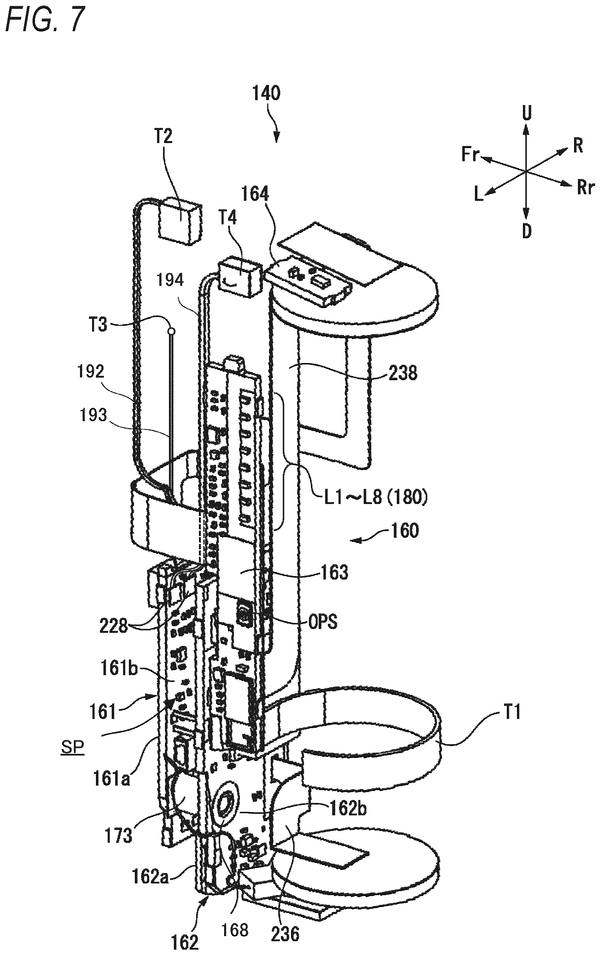

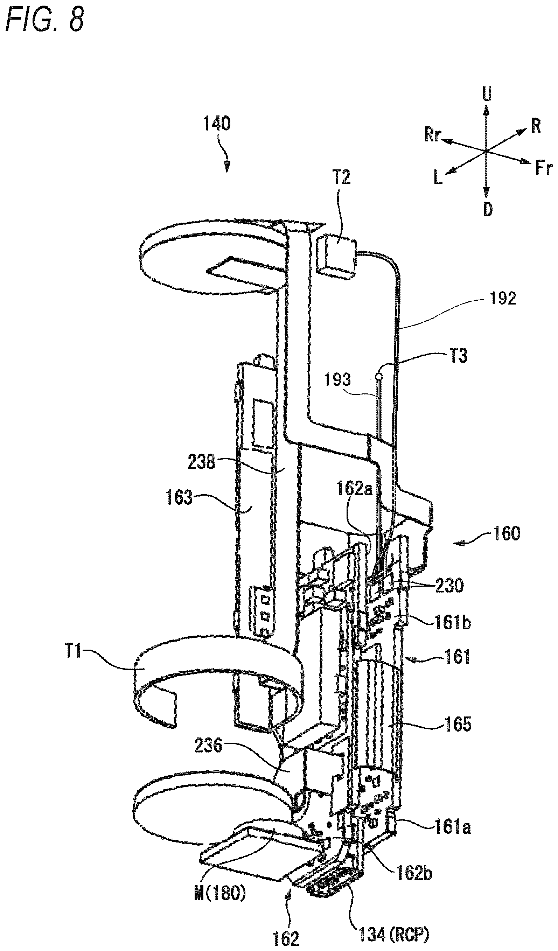

Fig. 5 is a perspective view of the internal unit 140 of the inhaler 100. Fig. 6 is an exploded perspective view of the internal unit 140 in Fig. 5. Fig. 7 is a perspective view of the internal unit 140 from which a power supply BAT and the chassis 150 are removed. Fig. 8 is another perspective view of the internal unit 140 from which the power supply BAT and the chassis 150 are removed.

The internal unit 140 accommodated in an internal space of the case 110 includes the chassis 150, the power supply BAT, a circuit unit 160, a heating unit 170, a notification unit 180, and various sensors.

The chassis 150 includes a plate-shaped chassis main body 151 which is disposed substantially in a center of the internal space of the case 110 in the front-rear direction and which extends in the up-down direction and the front-rear direction, a plate-shaped front-rear dividing wall 152 which is disposed substantially in the center of the internal space of the case 110 in the front-rear direction and which extends in the up-down direction and the left-right direction, a plate-shaped up-down dividing wall 153 which extends forward from substantially a center of the front-rear dividing wall 152 in the up-down direction, a plate-shaped chassis upper wall 154 which extends rearward from upper edge portions of the front-rear dividing wall 152 and the chassis main body 151, and a plate-shaped chassis lower wall 155 which extends rearward from lower edge portions of the front-rear dividing wall 152 and the chassis main body 151. A left surface of the chassis main body 151 is covered with the inner panel 118 and the outer panel 115 of the case 110 described above.

By the chassis 150, a heating unit accommodation region 142 is defined and formed in an upper front portion of the internal space of the case 110, a board accommodation region 144 is defined and formed in a lower front portion thereof, and a power supply accommodation space 146 is defined and formed in a rear portion thereof over the up-down direction.

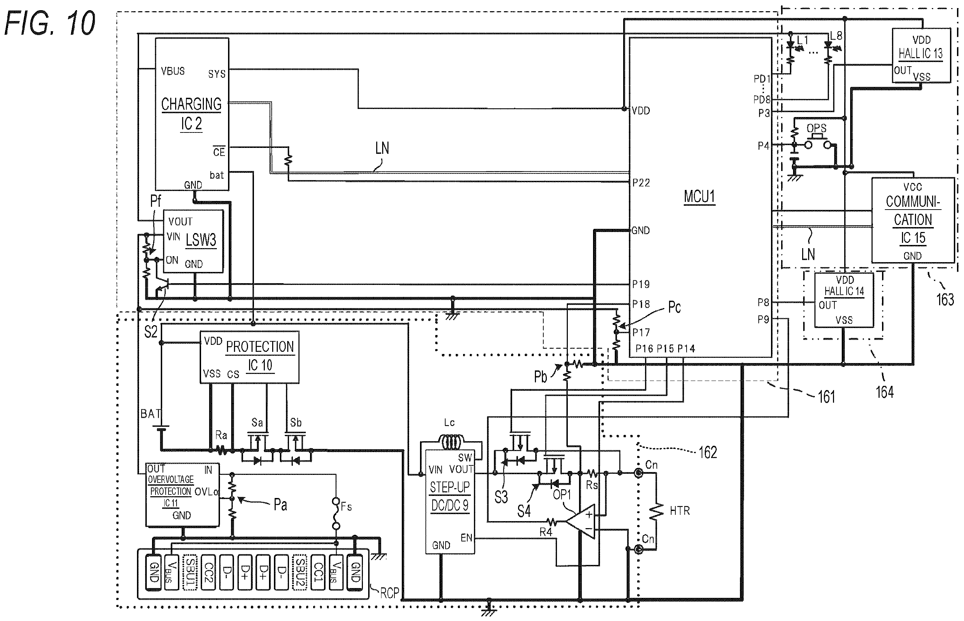

The heating unit 170 accommodated in the heating unit accommodation region 142 is constituted by a plurality of tubular members, and the tubular members are concentrically disposed to form a tubular body as a whole. The heating unit 170 includes a rod accommodation portion 172 capable of accommodating a part of the rod 500 therein, and a heater HTR (see Figs. 10 to 16) which heats the rod 500 from an outer periphery or a center It is preferable that a surface of the rod accommodation portion 172 and the heater HTR are thermally insulated by forming the rod accommodation portion 172 with a heat insulating material or providing a heat insulating material inside the rod accommodation portion 172. The heater HTR may be an element capable of heating the rod 500. The heater HTR is, for example, a heating element. Examples of the heating element include a heating resistor, a ceramic heater, and an induction-heating-type heater. As the heater HTR, for example, a heater having a positive temperature coefficient (PTC) characteristic in which a resistance value increases with an increase in temperature is preferably used. Alternatively, a heater HTR having a negative temperature coefficient (NTC) characteristic in which the resistance value decreases with an increase in temperature may be used. The heating unit 170 has a function of defining a flow path of air supplied to the rod 500 and a function of heating the rod 500. The case 110 is formed with a vent hole (not illustrated) for allowing air to flow in so that air can flow into the heating unit 170.

The power supply BAT accommodated in the power supply accommodation space 146 is a rechargeable secondary battery, an electric double layer capacitor, or the like, and is preferably a lithium ion secondary battery. An electrolyte of the power supply BAT may be constituted by one or a combination of a gel electrolyte, an electrolytic solution, a solid electrolyte, and an ionic liquid.

The notification unit 180 notifies various types of information such as a state of charge (SOC) indicating a charging state of the power supply BAT, a preheating time at the time of inhaling, and an inhaling available period. The notification unit 180 according to the present embodiment includes the eight LEDs L1 to L8 and a vibration motor M. The notification unit 180 may be constituted by a light emitting element such as the LEDs L1 to L8, a vibration element such as the vibration motor M, or a sound output element. The notification unit 180 may be a combination of two or more elements among a light emitting element, a vibration element, and a sound output element.

The various sensors include an intake sensor which detects a puff operation (inhaling operation) of the user, a power supply temperature sensor which detects a temperature of the power supply BAT, a heater temperature sensor which detects a temperature of the heater HTR, a case temperature sensor which detects a temperature of the case 110, a cover position sensor which detects a position of the slider 119, a panel detection sensor which detects attachment and detachment of the outer panel 115, and the like.

The intake sensor mainly includes, for example, a thermistor T2 disposed in the vicinity of the opening 132. The power supply temperature sensor mainly includes, for example, a thermistor T1 disposed in the vicinity of the power supply BAT. The heater temperature sensor mainly includes, for example, a thermistor T3 disposed in the vicinity of the heater HTR. As described above, the rod accommodation portion 172 is preferably thermally insulated from the heater HTR. In this case, the thermistor T3 is preferably in contact with or close to the heater HTR inside the rod accommodation portion 172. In a case where the heater HTR has the PTC characteristic or the NTC characteristic, the heater HTR may be used for the heater temperature sensor. The case temperature sensor mainly includes, for example, a thermistor T4 disposed in the vicinity of the left surface of the case 110. The cover position sensor mainly includes a Hall IC 14 (see Figs. 10 to 16) including a Hall element disposed in the vicinity of the slider 119. The panel detection sensor mainly includes a Hall IC 13 (see Figs. 10 to 16) including a Hall element disposed in the vicinity of an inner surface of the inner panel 118.

The circuit unit 160 includes four circuit boards, a plurality of integrate circuits (ICs), and a plurality of elements. The four circuit boards include an MCU-mounted board 161 to be described later on which a micro controller unit (MCU) 1 and a charging IC 2 are mainly disposed, a receptacle-mounted board 162 on which the charging terminal 134 is mainly disposed, an LED-mounted board 163 on which the operation switch OPS, the LEDs L1 to L8, and a communication IC 15 to be described later are disposed, and a Hall IC-mounted board 164 on which the Hall IC 14 to be described later including a Hall element constituting the cover position sensor is disposed.

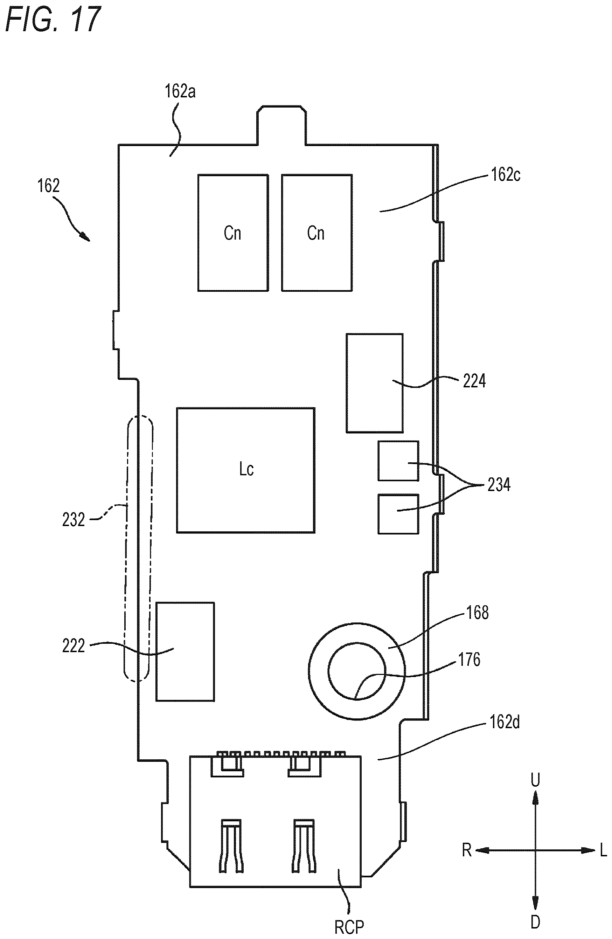

The MCU-mounted board 161 and the receptacle-mounted board 162 are disposed in parallel with each other in the board accommodation region 144. Specifically, the MCU-mounted board 161 and the receptacle-mounted board 162 are disposed such that element disposition surfaces thereof extend in the left-right direction and the up-down direction, and the MCU-mounted board 161 is disposed in front of the receptacle-mounted board 162. The MCU-mounted board 161 and the receptacle-mounted board 162 are provided with opening portions 175 and 176 (see Figs. 17 to 20), respectively. The MCU-mounted board 161 and the receptacle-mounted board 162 are fixed to the chassis 150 by a bolt 136 in a state where a cylindrical spacer 173 having a through hole is interposed between opening peripheral portions 166 and 168 of the opening portions 175 and 176.

The bolt 136 is inserted through the opening portion 175 of the MCU-mounted board 161, the through hole of the cylindrical spacer 173, and the opening portion 176 of the receptacle-mounted board 162, and is fixed in a state where the spacer 173 is sandwiched by a board fixing portion 156 of the front-rear dividing wall 152, which is disposed between the power supply BAT and each of the MCU-mounted board 161 and the receptacle-mounted board 162 in the front-rear direction. As a result, the MCU-mounted board 161 and the receptacle-mounted board 162 are held in parallel by the spacer 173.

The spacer 173 has conductivity, and grounds of the MCU-mounted board 161 and the receptacle-mounted board 162 are connected via the spacer 173. As a result, ground potentials of the MCU-mounted board 161 and the receptacle-mounted board 162 can be equalized, and supply of charging power and operating power between the MCU-mounted board 161 and the receptacle-mounted board 162 and communication therebetween can be stabilized.

For convenience, assuming that the surfaces of the MCU-mounted board 161 and the receptacle-mounted board 162 facing the front are main surfaces 161a and 162a, respectively, and surfaces opposite to the main surfaces 161a and 162a are secondary surfaces 161b and 162b, respectively, the secondary surface 161b of the MCU-mounted board 161 and the main surface 162a of the receptacle-mounted board 162 face each other with a predetermined gap SP therebetween. The main surface 161a of the MCU-mounted board 161 faces the front surface of the case 110, and the secondary surface 162b of the receptacle-mounted board 162 faces the front-rear dividing wall 152 of the chassis 150.

The MCU-mounted board 161 and the receptacle-mounted board 162 are electrically connected via a flexible wiring board 165. The flexible wiring board 165 electrically connecting the MCU-mounted board 161 and the receptacle-mounted board 162 connects FPC connection portions 231 and 232 of the MCU-mounted board 161 and the receptacle-mounted board 162 (see Figs. 17 to 20). Elements and ICs mounted on the MCU-mounted board 161 and the receptacle-mounted board 162 will be described later.

The LED-mounted board 163 is disposed on a left side surface of the chassis main body 151 and between the two magnets 124 disposed vertically. An element disposition surface of the LED-mounted board 163 is disposed along the up-down direction and the front-rear direction. In other words, element disposition surfaces of the MCU-mounted board 161 and the receptacle-mounted board 162 are orthogonal to the element disposition surface of the LED-mounted board 163. In this way, the element disposition surfaces of the MCU-mounted board 161 and the receptacle-mounted board 162 and the element disposition surface of the LED-mounted board 163 are not limited to being orthogonal to one another, and preferably intersect with one another (not parallel with one another). The vibration motor M constituting the notification unit 180 together with the LEDs L1 to L8 is fixed to a lower surface of the chassis lower wall 155 and is electrically connected to the MCU-mounted board 161.

The Hall IC-mounted board 164 is disposed on the upper surface of the chassis upper wall 154.

### <Operation Modes of Inhaler>

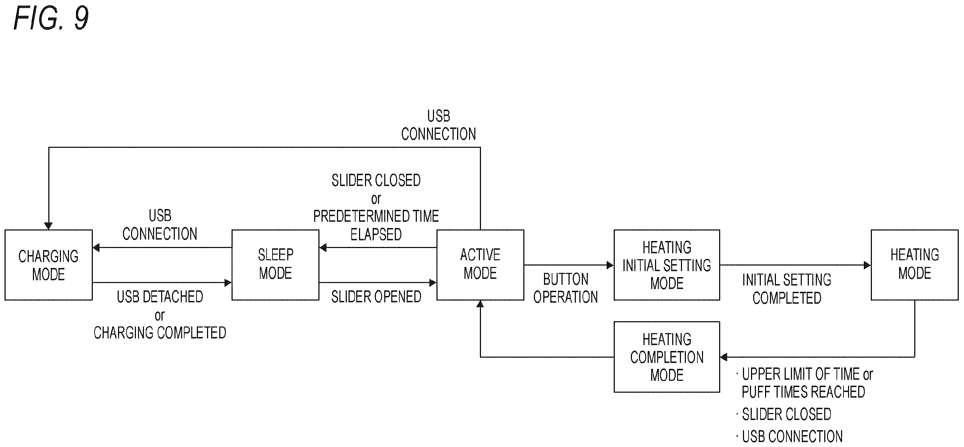

Fig. 9 is a schematic diagram for illustrating operation modes of the inhaler 100. As illustrated in Fig. 9, the operation modes of the inhaler 100 include a charging mode, a sleep mode, an active mode, a heating initial setting mode, a heating mode, and a heating completion mode.

The sleep mode is a mode in which supply of power to electrical components mainly required for heating control of the heater HTR is stopped to save power.

The active mode is a mode in which most of the functions excluding the heating control of the heater HTR are enabled. The inhaler 100 switches the operation mode to the active mode in a case where the slider 119 is opened in a state of operating in the sleep mode. The inhaler 100 switches the operation mode to the sleep mode in a case where the slider 119 is closed or a non-operation time of the operation switch OPS reaches a predetermined time in a state of operating in the active mode.

The heating initial setting mode is a mode for performing initial setting of control parameters and the like for starting the heating control of the heater HTR. The inhaler 100 switches the operation mode to the heating initial setting mode in a case where the operation of the operation switch OPS is detected in a state of operating in the active mode, and switches the operation mode to the heating mode in a case where the initial setting is completed.

The heating mode is a mode in which the heating control of the heater HTR (heating control for aerosol generation and heating control for temperature detection) is executed. The inhaler 100 starts the heating control of the heater HTR in a case where the operation mode is switched to the heating mode.

The heating completion mode is a mode in which a completion process (storage process of heating history or the like) of the heating control of the heater HTR is executed. The inhaler 100 switches the operation mode to the heating completion mode in a case where an energization time to the heater HTR or the number of times of inhaling by the user reaches an upper limit or the slider 119 is closed in a state of operating in the heating mode, and switches the operation mode to the active mode in a case where the completion process is completed. The inhaler 100 switches the operation mode to the heating completion mode in a case where a USB connection is established in a state of operating in the heating mode, and switches the operation mode to the charging mode in a case where the completion process is completed. As illustrated in Fig. 9, in this case, the operation mode may be switched to the active mode before the operation mode is switched to the charging mode. In other words, the inhaler 100 may switch the operation mode in the order of the heating completion mode, the active mode, and the charging mode in a case where the USB connection is established in a state of operating in the heating mode.

The charging mode is a mode in which the power supply BAT is charged by power supplied from the external power supply connected to the receptacle RCP. The inhaler 100 switches the operation mode to the charging mode in a case where an external power supply is connected (USB connected) to the receptacle RCP in a state of operating in the sleep mode or the active mode. The inhaler 100 switches the operation mode to the sleep mode in a case where the charging of the power supply BAT is completed or the connection between the receptacle RCP and the external power supply is released in a state of operating in the charging mode.

### <Outline of Circuit of Internal Unit>

Fig. 10 is a diagram illustrating a schematic configuration of an electric circuit of the internal unit 140. In Fig. 10, only main elements and ICs are illustrated.

A wiring indicated by a thick solid line in Fig. 10 is a wiring having the same potential as a reference potential (ground potential) of the internal unit 140 (wiring connected to a ground provided in the internal unit 140), and this wiring is hereinafter referred to as a ground line. In Fig. 10, an electrical component in which a plurality of circuit elements are formed into a chip is indicated by a rectangle, and reference numerals of various terminals are described inside the rectangle. A power supply terminal VCC and a power supply terminal VDD mounted on the chip each indicate a power supply terminal on a high potential side. A power supply terminal VSS and a ground terminal GND mounted on the chip each indicate a power supply terminal on a low potential side (reference potential side). In the electrical component formed into a chip, a difference between a potential of the power supply terminal on the high potential side and a potential of the power supply terminal on the low potential side becomes a power supply voltage. The electrical component formed into a chip performs various functions using the power supply voltage.

The MCU-mounted board 161 is provided with, as main electrical components, the MCU 1 which integrally controls the overall inhaler 100, the charging IC 2 which performs charging control of the power supply BAT, a load switch (hereinafter, LSW) 3 configured by combining a capacitor, a resistor, a transistor, and the like, and a voltage divider circuit Pc for detecting USB connection.

The ground terminal GND of each of the charging IC 2 and the LSW 3 is connected to the ground line.

The LED-mounted board 163 is provided with, as main electrical components, the Hall IC 13 including the Hall element constituting the panel detection sensor, the LEDs L1 to L8, the operation switch OPS, and the communication IC 15. The communication IC 15 is a communication module for communicating with an electronic device such as a smartphone. Each of the power supply terminal VSS of the Hall IC 13 and the ground terminal GND of the communication IC 15 is connected to the ground line. The communication IC 15 and the MCU 1 can communicate with each other via a communication line LN. One end of the operation switch OPS is connected to the ground line, and the other end of the operation switch OPS is connected to a terminal P4 of the MCU 1.

The receptacle-mounted board 162 is provided with, as main electrical components, a power supply connector electrically connected to the power supply BAT (described as the power supply BAT connected to the power supply connector in the drawing), the step-up DC/DC converter 9 (described as the step-up DC/DC 9 in the drawing), a protection IC 10, an overvoltage protection IC 11, the receptacle RCP, switches S3 and S4 constituted by a MOSFET, the operational amplifier OP1, and a pair of heater connectors Cn (positive electrode side and negative electrode side) electrically connected to the heater HTR.

The two ground terminals GND of the receptacle RCP, the ground terminal GND of the step-up DC/DC converter 9, the power supply terminal VSS of the protection IC 10, the ground terminal GND of the overvoltage protection IC 11, and a negative power supply terminal of the operational amplifier OP1 are each connected to the ground line.

The Hall IC-mounted board 164 is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects opening and closing of the slider 119 based on a signal input to the terminal P8.

### <Details of Circuit of Internal Unit>

Hereinafter, a connection relation or the like between the electrical components will be described with reference to Fig. 10.

Two power supply input terminals V_{BUS} of the receptacle RCP are connected to an input terminal IN of the overvoltage protection IC 11 via a protection element such as a fuse Fs. In a case where a USB plug is connected to the receptacle RCP and a USB cable including the USB plug is connected to an external power supply, a USB voltage V_{USB} is supplied to the two power supply input terminals V_{BUS} of the receptacle RCP.

One end of a voltage divider circuit Pa including a series circuit of two resistors is connected to the input terminal IN of the overvoltage protection IC 11. The other end of the voltage divider circuit Pa is connected to the ground line. A connection point of the two resistors constituting the voltage divider circuit Pa is connected to a voltage detection terminal OVLo of the overvoltage protection IC 11. In a state where a voltage input to the voltage detection terminal OVLo is less than a threshold, the overvoltage protection IC 11 outputs the voltage input to the input terminal IN from the output terminal OUT. In a case where the voltage input to the voltage detection terminal OVLo is equal to or higher than a threshold (overvoltage), the overvoltage protection IC 11 stops the voltage output from the output terminal OUT (cuts off an electrical connection between the LSW 3 and the receptacle RCP) to protect the electrical components downstream of the overvoltage protection IC 11. The output terminal OUT of the overvoltage protection IC 11 is connected to an input terminal VIN of the LSW 3 and one end of the voltage divider circuit Pc (series circuit of two resistors) connected to the MCU 1. The other end of the voltage divider circuit Pc is connected to the ground line. A connection point of the two resistors constituting the voltage divider circuit Pc is connected to a terminal P17 of the MCU 1.

One end of a voltage divider circuit Pf including a series circuit of two resistors is connected to the input terminal VIN of the LSW 3. The other end of the voltage divider circuit Pf is connected to the ground line. A connection point of the two resistors constituting the voltage divider circuit Pf is connected to a control terminal ON of the LSW 3. A collector terminal of a bipolar transistor S2 is connected to the control terminal ON of the LSW 3. An emitter terminal of the bipolar transistor S2 is connected to the ground line. A base terminal of the bipolar transistor S2 is connected to a terminal P19 of the MCU 1. The LSW 3 outputs a voltage input to the input terminal VIN from an output terminal VOUT in a case where a signal input to the control terminal ON becomes a high level. The output terminal VOUT of the LSW 3 is connected to an input terminal VBUS of the charging IC 2 and an anode of each of the LEDs L1 to L8.

The MCU 1 turns on the bipolar transistor S2 while the USB connection is not established. Accordingly, since the control terminal ON of the LSW 3 is connected to the ground line via the bipolar transistor S2, a low-level signal is input to the control terminal ON of the LSW 3.

The bipolar transistor S2 connected to the LSW 3 is turned off by the MCU 1 in a case where the USB connection is established. By turning off the bipolar transistor S2, the USB voltage V_{USB} divided by the voltage divider circuit Pf is input to the control terminal ON of the LSW 3. Therefore, in a case where the USB connection is established and the bipolar transistor S2 is turned off, a high-level signal is input to the control terminal ON of the LSW 3. Accordingly, the LSW 3 outputs, from the output terminal VOUT, the USB voltage V_{USB} supplied from the USB cable. It should be noted that even when the USB connection is established in a state where the bipolar transistor S2 is not turned off, since the control terminal ON of the LSW 3 is connected to the ground line via the bipolar transistor S2, a low-level signal continues to be input to the control terminal ON of the LSW 3 unless the MCU 1 turns off the bipolar transistor S2.

A positive electrode terminal of the power supply BAT is connected to the power supply terminal VDD of the protection IC 10, an input terminal VIN of the step-up DC/DC converter 9, and a charging terminal bat of the charging IC 2. Therefore, the power supply voltage V_{BAT} of the power supply BAT is supplied to the protection IC 10, the charging IC 2, and the step-up DC/DC converter 9. A resistor Ra, a switch Sa constituted by a MOSFET, and a switch Sb constituted by a MOSFET are connected in series to a negative electrode terminal of the power supply BAT in this order. A current detection terminal CS of the protection IC 10 is connected to a connection point between the resistor Ra and the switch Sa. Each of control terminals of the switch Sa and the switch Sb is connected to the protection IC 10.

The protection IC 10 acquires a current value flowing through the resistor Ra during charging and discharging of the power supply BAT from the voltage input to the current detection terminal CS, and in a case where the current value becomes excessively large (in a case of overcurrent), performs opening and closing control of the switch Sa and the switch Sb to stop charging or discharging of the power supply BAT, thereby protecting the power supply BAT. More specifically, in a case where an excessively large current value is acquired at the time of charging the power supply BAT, the protection IC 10 turns off the switch Sb to stop the charging of the power supply BAT. In a case where an excessively large current value is acquired at the time of discharging the power supply BAT, the protection IC 10 turns off the switch Sa to stop the discharging of the power supply BAT. In addition, in a case where a voltage value of the power supply BAT becomes abnormal based on the voltage input to the power supply terminal VDD (in a case of overcharge or overvoltage), the protection IC 10 performs opening and closing control of the switch Sa and the switch Sb to stop charging or discharging of the power supply BAT, thereby protecting the power supply BAT. More specifically, in a case where the overcharge of the power supply BAT is detected, the protection IC 10 turns off the switch Sb to stop the charging of the power supply BAT. In a case where the overdischarge of the power supply BAT is detected, the protection IC 10 turns off the switch Sa to stop the discharging of the power supply BAT.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 performs ON/OFF control of a built-in transistor connected to the switching terminal SW, thereby stepping up an input voltage and outputting the stepped-up voltage from an output terminal VOUT thereof. The input terminal VIN of the step-up DC/DC converter 9 constitutes a power supply terminal of the step-up DC/DC converter 9 on a high potential side. The step-up DC/DC converter 9 performs a step-up operation in a case where a signal input to an enable terminal EN is at a high level. In the USB-connected state, the signal input to the enable terminal EN of the step-up DC/DC converter 9 may be controlled to a low level by the MCU 1. Alternatively, in the USB-connected state, the MCU 1 may not control the signal input to the enable terminal EN of the step-up DC/DC converter 9 to make a potential of the enable terminal EN unstable.

A source terminal of a switch S4 constituted by a P-channel MOSFET is connected to the output terminal VOUT of the step-up DC/DC converter 9. A gate terminal of the switch S4 is connected to a terminal P15 of the MCU 1. One end of a resistor Rs is connected to a drain terminal of the switch S4. The other end of the resistor Rs is connected to the heater connector Cn on the positive electrode side connected to one end of the heater HTR. A voltage divider circuit Pb including two resistors is connected to a connection point between the switch S4 and the resistor Rs. A connection point of the two resistors constituting the voltage divider circuit Pb is connected to a terminal P18 of the MCU 1. A connection point between the switch S4 and the resistor Rs is further connected to a positive power supply terminal of the operational amplifier OP1 .

A connection line between the output terminal VOUT of the step-up DC/DC converter 9 and the source terminal of the switch S4 is connected to a source terminal of the switch S3 constituted by a P-channel MOSFET. A gate terminal of the switch S3 is connected to the terminal P16 of the MCU 1. A drain terminal of the switch S3 is connected to a connection line between the resistor Rs and the heater connector Cn on the positive electrode side. In this way, a circuit including the switch S3 and a circuit including the switch S4 and the resistor Rs are connected in parallel between the output terminal VOUT of the step-up DC/DC converter 9 and the positive electrode side of the heater connector Cn. The circuit including the switch S3 does not include a resistor, and thus is a circuit having a lower resistance than the circuit including the switch S4 and the resistor Rs.

A terminal P14 of the MCU 1 is connected to the enable terminal EN of the step-up DC/DC converter 9.

A non-inverting input terminal of the operational amplifier OP1 is connected to the connection line between the resistor Rs and the heater connector Cn on the positive electrode side. An inverting input terminal of the operational amplifier OP1 is connected to the ground line and the heater connector Cn on the negative electrode side connected to the other end of the heater HTR. One end of a resistor R4 is connected to an output terminal of the operational amplifier OP1. The other end of the resistor R4 is connected to a terminal P9 of the MCU 1.

The input terminal VBUS of the charging IC 2 is connected to an anode of each of the LEDs L1 to L8. Cathodes of the LEDs L1 to L8 are connected to control terminals PD1 to PD8 of the MCU 1 via resistors for current limitation, respectively. That is, the LEDs L1 to L8 are connected in parallel with the input terminal VBUS. The LEDs L1 to L8 are configured to be able to be operated by the USB voltage V_{USB} supplied from the USB cable connected to the receptacle RCP and a voltage supplied from the power supply BAT via the charging IC 2. Transistors (switching elements) connected to the control terminals PD1 to PD8 and the ground terminal GND are built in the MCU 1. The MCU 1 turns on the transistor connected to the control terminal PD1 to energize the LED L1 and turn on the LED L1. The MCU 1 turns off the transistor connected to the control terminal PD1 to turn off the LED L1. By switching ON and OFF of the transistor connected to the control terminal PD1 at a high speed, the luminance and the light emission pattern of the LED L1 can be dynamically controlled. Similarly, the LEDs L2 to L8 are controlled to be turned on and turned off by the MCU 1.

The charging IC 2 has a charging function of charging the power supply BAT based on the USB voltage V_{USB} input to the input terminal VBUS. The charging IC 2 acquires a charging current or a charging voltage of the power supply BAT from a terminal or wiring (not illustrated), and performs charging control of the power supply BAT (control on supply of power from the charging terminal bat to the power supply BAT) based on the acquired charging current or charging voltage.

The charging IC 2 further includes a V_{BAT} power path function and an OTG function. The V_{BAT} power path function is a function of outputting, from an output terminal SYS, a system power supply voltage VccO which is substantially equal to the power supply voltage V_{BAT} input to the charging terminal bat. The OTG function is a function of outputting a system power supply voltage Vcc4 obtained by stepping up the power supply voltage V_{BAT} input to the charging terminal bat from the input terminal VBUS. ON/OFF of the OTG function of the charging IC 2 is controlled by the MCU 1 through serial communication using the communication line LN. In the OTG function, the power supply voltage V_{BAT} input to the charging terminal bat may be output as it is from the input terminal VBUS. In this case, the power supply voltage V_{BAT} is substantially equal to the system power supply voltage Vcc4. It should be noted that a plurality of signal lines such as a data line for data transmission and a clock line for synchronization are required to perform serial communication, but only one signal line is illustrated in Figs. 10 to 16 for simplification.

The output terminal SYS of the charging IC 2 is connected to the power supply terminal VDD of the MCU 1, the power supply terminal VDD of the Hall IC 13, the power supply terminal VCC of the communication IC 15, the power supply terminal VDD of the Hall IC 14, and a series circuit (series circuit of a resistor and a capacitor) connected to the operation switch OPS. A charge enable terminal CE( ) of the charging IC 2 is connected to a terminal P22 of the MCU 1 via a resistor. In order to stabilize the voltage supplied to these power supply terminals, a voltage regulator may be connected to the output terminal SYS of the charging IC 2.

An output terminal OUT of the Hall IC 13 is connected to a terminal P3 of the MCU 1. In a case where the outer panel 115 is detached, a low-level signal is output from the output terminal OUT of the Hall IC 13. The MCU 1 determines whether the outer panel 115 is attached based on the signal input to the terminal P3.

The LED-mounted board 163 is provided with the series circuit (series circuit of a resistor and a capacitor) connected to the operation switch OPS. The series circuit is connected to a power supply line which connects the output terminal SYS of the charging IC 2 and a power supply line connecting the power supply terminal VDD of the MCU 1, the power supply terminal VDD of the Hall IC 13, the power supply terminal VDD of the Hall IC 14, and the power supply terminal VCC of the communication IC 15. A connection point between the resistor and the capacitor of the series circuit is connected to the terminal P4 of the MCU 1 and the operation switch OPS. In a state where the operation switch OPS is not pressed, the operation switch OPS is not conducted and the signal input to the terminal P4 of the MCU 1 becomes a high level due to the voltage output from the output terminal SYS of the charging IC 2. In a case where the operation switch OPS is pressed and the operation switch OPS is brought into a conductive state, the signal input to the terminal P4 of the MCU 1 becomes a low level because of connection to the ground line. The MCU 1 detects the operation of the operation switch OPS based on the signal input to the terminal P4.

### <Operation in Each Operation Mode of Inhaler>

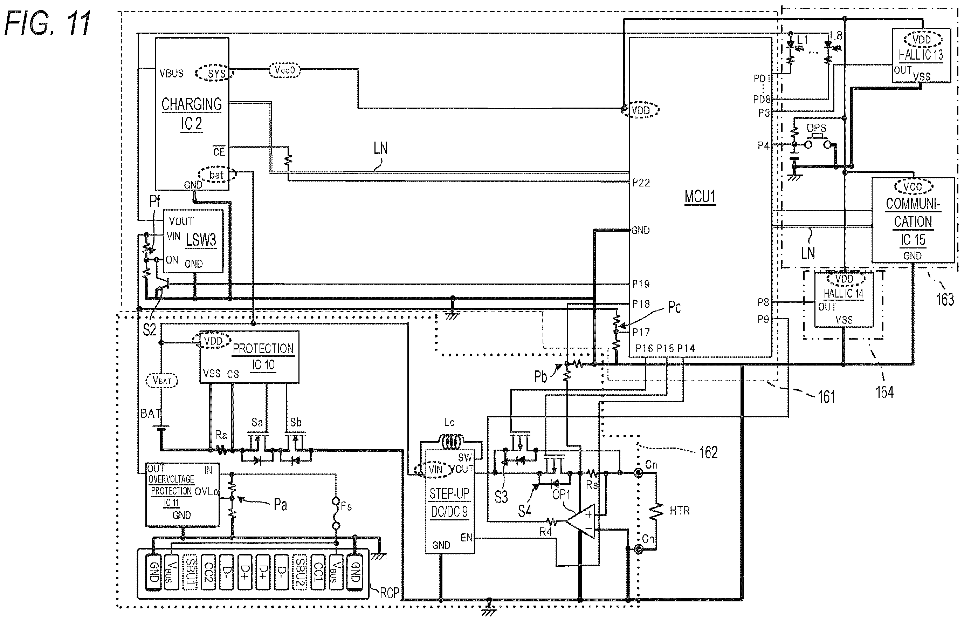

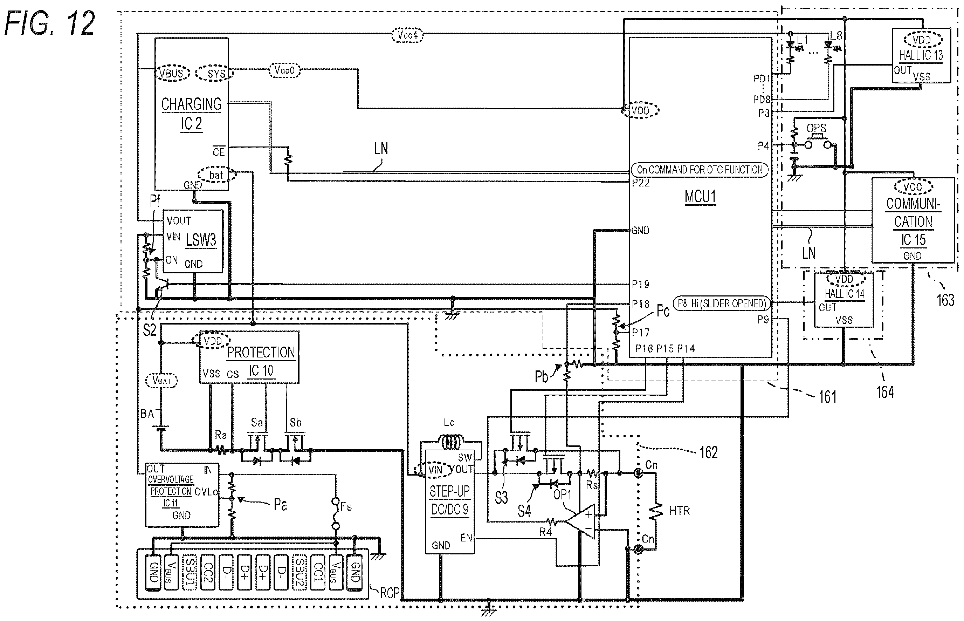

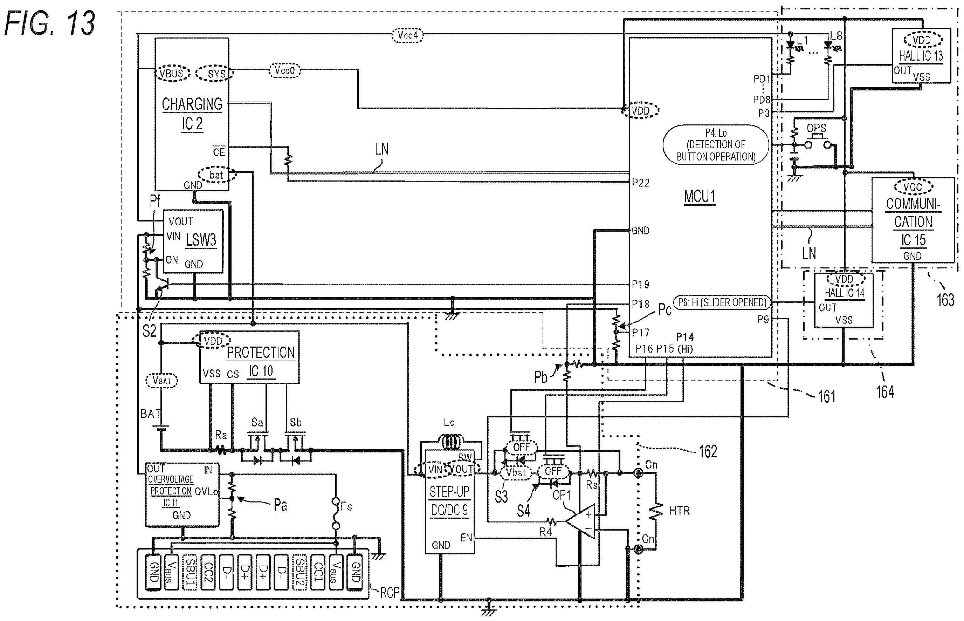

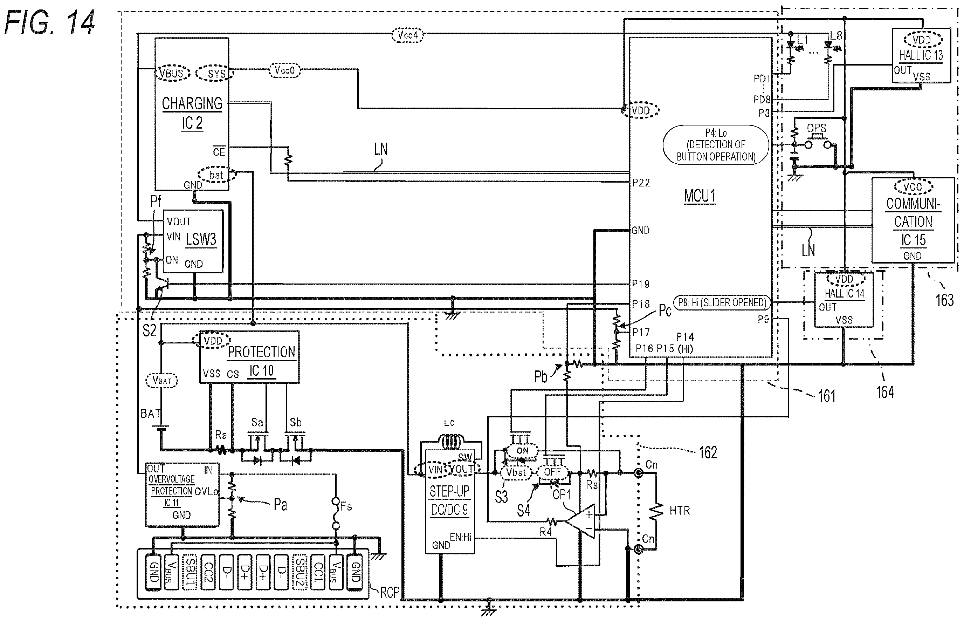

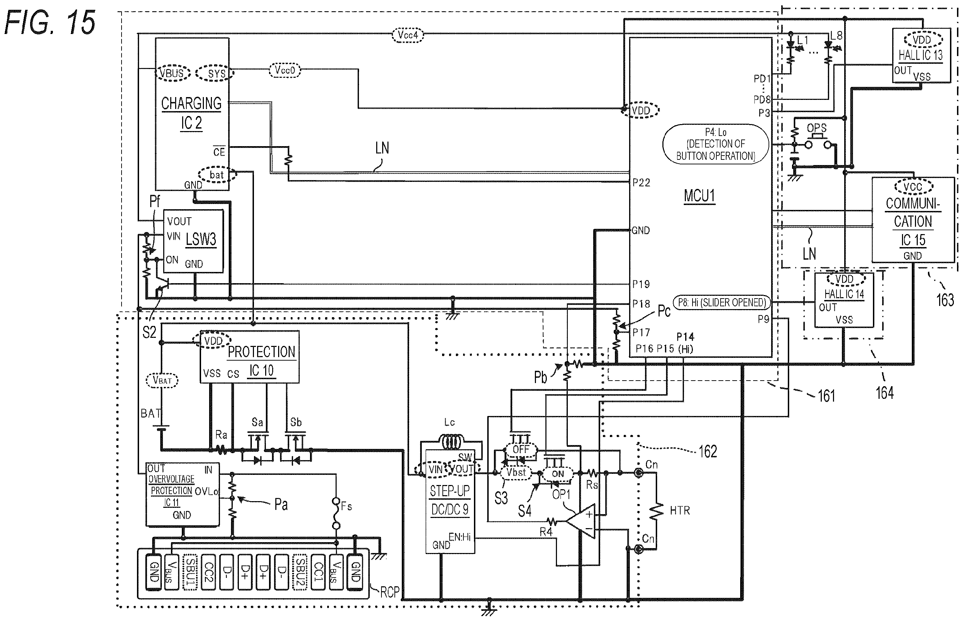

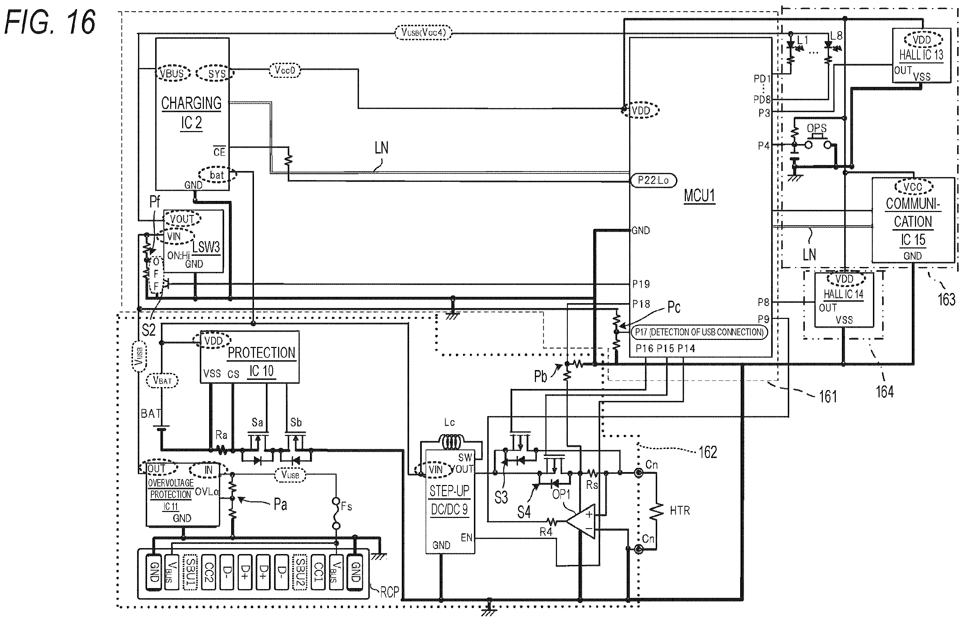

Hereinafter, operations of the electric circuit illustrated in Fig. 10 will be described with reference to Figs. 11 to 16. Fig. 11 is a diagram for illustrating an operation of the electric circuit in the sleep mode. Fig. 12 is a diagram for illustrating an operation of the electric circuit in the active mode. Fig. 13 is a diagram for illustrating an operation of the electric circuit in the heating initial setting mode. Fig. 14 is a diagram for illustrating an operation of the electric circuit at the time of heating the heater HTR in the heating mode. Fig. 15 is a diagram for illustrating an operation of the electric circuit at the time of detecting a temperature of the heater HTR in the heating mode. Fig. 16 is a diagram for illustrating an operation of the electric circuit in the charging mode. In each of Figs. 11 to 16, terminals surrounded by a broken ellipse, among the terminals of the electrical components formed into chips, indicate terminals to which the power supply voltage V_{BAT}, the USB voltage Vusa, the system power supply voltage, and the like are input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: Fig. 11>

The MCU 1 enables the V_{BAT} power path function of the charging IC 2 and disables the OTG function and the charging function. The USB voltage V_{USB} is not input to the input terminal VBUS of the charging IC 2, whereby the V_{BAT} power path function of the charging IC 2 is enabled. Since a signal for enabling the OTG function from the communication line LN is not output from the MCU 1 to the charging IC 2, the OTG function is disabled. Therefore, the charging IC 2 generates the system power supply voltage VccO from the power supply voltage V_{BAT} input to the charging terminal bat, and outputs the system power supply voltage VccO from the output terminal SYS. The system power supply voltage VccO output from the output terminal SYS is input to the power supply terminal VDD of the MCU 1, the power supply terminal VDD of the Hall IC 13, the power supply terminal VCC of the communication IC 15, and the power supply terminal VDD of the Hall IC 14. The system power supply voltage VccO is set to be lower than the USB voltage V_{USB} input from the external power supply to the power supply input terminal V_{BUS} at the time of charging.

As described above, since the OTG function of the charging IC 2 is stopped in the sleep mode, the supply of power to the LEDs L1 to L8 is stopped.

### <Active Mode: Fig. 12>

In a case where the MCU 1 detects that the signal input to the terminal P8 becomes a high level and the slider 119 is opened from the state under the sleep mode in Fig. 11, the MCU 1 activates the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: Fig. 13>

In a case where the signal input to the terminal P4 becomes a low level (the operation switch OPS is pressed) from the state in Fig. 12, the MCU 1 performs various settings necessary for heating, and then inputs a high-level enable signal from the terminal P14 to the enable terminal EN of the step-up DC/DC converter 9. Accordingly, the step-up DC/DC converter 9 outputs, from the output terminal VOUT, the drive voltage V_{bst} obtained by stepping up the power supply voltage V_{BAT}. The drive voltage V_{bst} is supplied to the switch S3 and the switch S4. In this state, the switch S3 and the switch S4 are turned off. Thereafter, the process proceeds to the heating mode.

### <Heater Heating in Heating Mode: Fig. 14>

In the state of Fig. 13, the MCU 1 starts switching control of the switch S3 connected to the terminal P16 and switching control of the switch S4 connected to the terminal P15. The switching control may be automatically started when the above-described heating initial setting mode is completed, or may be started by further pressing the operation switch OPS. Specifically, the MCU 1 performs, as illustrated in Fig. 14, heating control in which the switch S3 is turned on, the switch S4 is turned off, the drive voltage V_{bst} is supplied to the heater HTR, and the heater HTR is heated for generating aerosol, and performs, as illustrated in Fig. 15, temperature detection control in which the switch S3 is turned off, the switch S4 is turned on, and the temperature of the heater HTR is detected.

### <Heater Temperature Detection in Heating Mode: Fig. 15>

As illustrated in Fig. 15, during the temperature detection control, the drive voltage V_{bst} is input to the positive power supply terminal of the operational amplifier OP1 and is input to the voltage divider circuit Pb. The voltage divided by the voltage divider circuit Pb is input to the terminal P18 of the MCU 1. The MCU 1 acquires a voltage of the positive power supply terminal of the operational amplifier OP1 during the temperature detection control based on the voltage input to the terminal P18.

In addition, during the temperature detection control, the drive voltage V_{bst} is supplied to the series circuit of the resistor Rs and the heater HTR. Further, a voltage Vₕₑₐₜ obtained by dividing the drive voltage V_{bst} by the resistor Rs and the heater HTR is input to the non-inverting input terminal of the operational amplifier OP1. The operational amplifier OP1 amplifies a difference between the voltage input to the inverting input terminal and the voltage Vₕₑₐₜ input to the non-inverting input terminal and outputs the amplified difference.

An output signal of the operational amplifier OP1 is input to the terminal P9 of the MCU 1. The MCU 1 acquires the temperature of the heater HTR based on the signal input to the terminal P9, the voltage of the positive power supply terminal of the operational amplifier OP1 acquired based on the input voltage of the terminal P18, and a known electric resistance value of the resistor Rs.

### <Charging Mode: Fig. 16>

Fig. 16 illustrates a case where a USB connection is established in the sleep mode. In a case where the USB connection is established, the USB voltage V_{USB} is input to the input terminal VIN of the LSW 3 via the overvoltage protection IC 11. The USB voltage V_{USB} is also supplied to the voltage divider circuit Pf connected to the input terminal VIN of the LSW 3. Since the bipolar transistor S2 is turned on immediately after the USB connection is established, the signal input to the control terminal ON of the LSW 3 remains at a low level. The USB voltage V_{USB} is also supplied to the voltage divider circuit Pc connected to the terminal P17 of the MCU 1, and a voltage divided by the voltage divider circuit Pc is input to the terminal P17. The MCU 1 detects that the USB connection is established based on the voltage input to the terminal P17. The voltage divider circuit Pc is configured to set the voltage input to the terminal P17 to be equal to or lower than the system power supply voltage VccO input to the power supply terminal VDD of the MCU 1.

In a case where the MCU 1 detects that the USB connection is established, the MCU 1 turns off the bipolar transistor S2 connected to the terminal P19. In a case where a low-level signal is input to a gate terminal of the bipolar transistor S2, the USB voltage V_{USB} divided by the voltage divider circuit Pf is input to the control terminal ON of the LSW 3. Accordingly, a high-level signal is input to the control terminal ON of the LSW 3, and the LSW 3 outputs the USB voltage V_{USB} from the output terminal VOUT. The USB voltage Vusa output from the LSW 3 is input to the input terminal VBUS of the charging IC 2. In addition, the USB voltage V_{USB} output from the LSW 3 is supplied to the LEDs L1 to L8 as the system power supply voltage Vcc4.

In a case where the MCU 1 detects that the USB connection is established, the MCU 1 further outputs a low-level enable signal from the terminal P22 to the charge enable terminal CE(⁻) of the charging IC 2. Accordingly, the charging IC 2 enables the charging function of the power supply BAT and starts charging the power supply BAT by the USB voltage V_{USB} input to the input terminal VBUS. At this time, the MCU 1 does not perform the heating of the heater HTR for aerosol generation while keeping the switches S3 and S4 off. In other words, when the MCU 1 detects that the USB connection is established based on the voltage input to the terminal P17, the MCU 1 prohibits a supply of a power from the power supply BAT to the heater connector Cn. As a result, power consumption from the power supply BAT during charging can be avoided.

### [Receptacle-mounted Board]

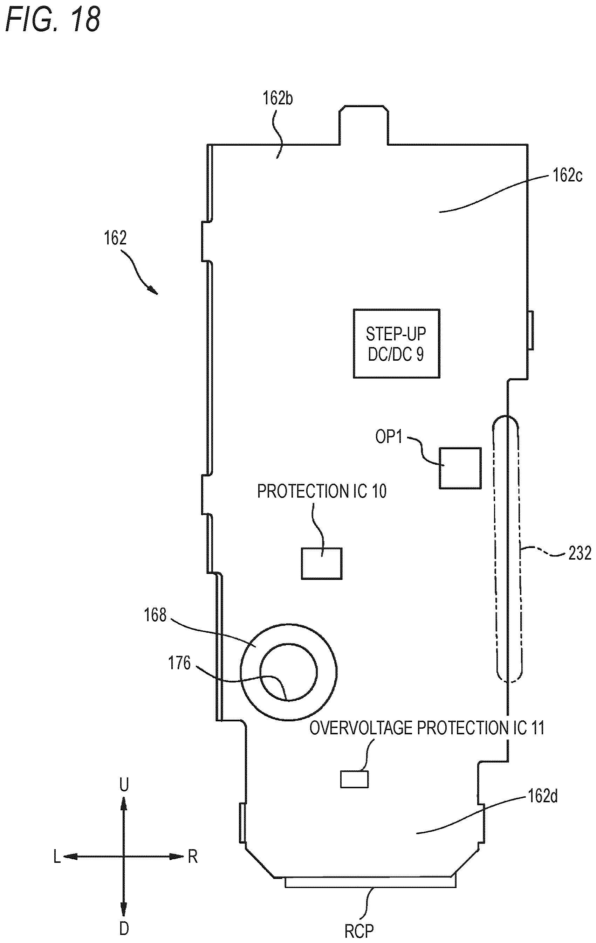

Fig. 17 is a diagram illustrating the main surface 162a of the receptacle-mounted board 162. In Fig. 17, only main electronic components (including ICs and elements) are illustrated, and other electronic components are not illustrated (the same applies to Figs. 18 to 20). On the main surface 162a of the receptacle-mounted board 162 extending in the up-down direction, the heater connector Cn is disposed on an end portion 162c on an upper side (hereinafter, referred to as upper end portion 162c), the receptacle RCP is disposed on an end portion 162d on a lower side (hereinafter, referred to as lower end portion 162d), and the reactor Lc of the step-up DC/DC converter 9 is disposed between the heater connector Cn and the receptacle RCP. A heater wiring (not illustrated) extending from the heater HTR is connected to the heater connector Cn. The upper end portion 162c of the receptacle-mounted board 162 is an upper region among three divided regions in the up-down direction of the receptacle-mounted board 162 which is long in the up-down direction, and the lower end portion 162d of the receptacle-mounted board 162 is a lower region among the three divided regions.

In the vicinity of the receptacle RCP, a battery connector 222 on the positive electrode side (hereinafter, referred to as positive-electrode-side battery connector 222) is disposed on the right side, and the opening portion 176 for fixing the spacer 173 is disposed on the left side. Further, a battery connector 224 on the negative electrode side (hereinafter, referred to as negative-electrode-side battery connector 224) and the power supply temperature detecting connector 234 are disposed on the left side of the reactor Lc. A positive-electrode-side power supply bus bar 236 (see Figs. 7 and 8) extending from the positive electrode terminal of the power supply BAT is connected to the positive-electrode-side battery connector 222, and a negative-electrode-side power supply bus bar 238 (see Figs. 7 and 8) extending from the negative electrode terminal of the power supply BAT is connected to the negative-electrode-side battery connector 224. The thermistor T1 (hereinafter, also referred to as power supply thermistor T1) constituting the power supply temperature sensor is connected to the power supply temperature detecting connector 234.

Fig. 18 is a view illustrating the secondary surface 162b of the receptacle-mounted board 162. On the secondary surface 162b of the receptacle-mounted board 162, the overvoltage protection IC 11 is disposed below the opening portion 176, and the protection IC 10, the operational amplifier OP1, and the step-up DC/DC converter 9 are disposed above the opening portion 176 in this order from below.

### [MCU-mounted Board]

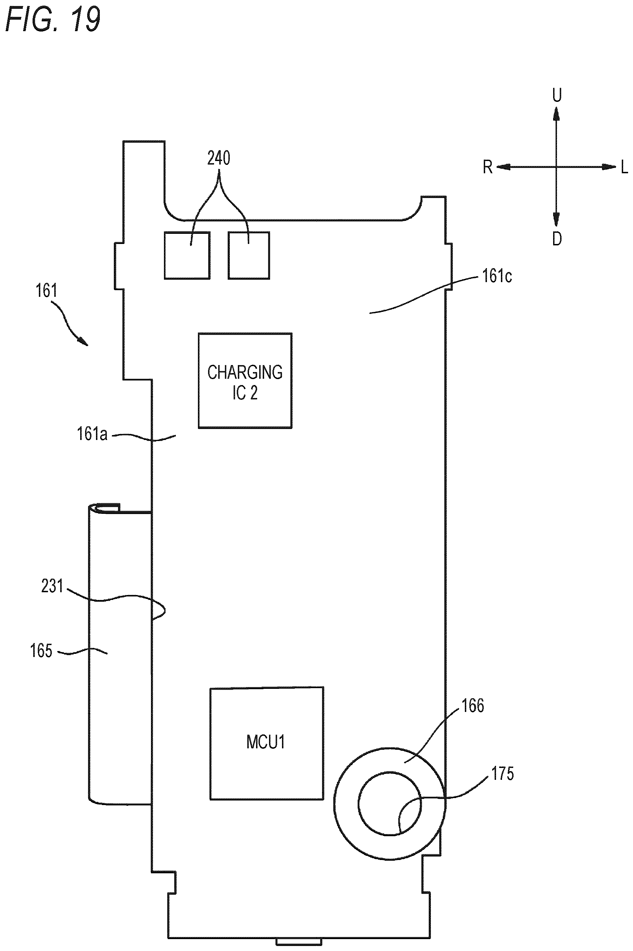

Fig. 19 is a view illustrating the main surface 161a of the MCU-mounted board 161. On the main surface 161a of the MCU-mounted board 161 extending in the up-down direction, the heater temperature detecting connector 240 is disposed on an end portion 161c on an upper side (hereinafter, referred to as upper end portion 161c), and the charging IC 2 is disposed on a lower side thereof. In addition, the opening portion 175 for fixing the spacer 173 is disposed at a position corresponding to the opening portion 176 of the receptacle-mounted board 162, and the MCU 1 is disposed in the vicinity of the opening portion 175. The upper end portion 161c of the MCU-mounted board 161 is an upper region among three divided regions in the up-down direction of the MCU-mounted board 161 extending in the up-down direction.

The thermistor T3 (hereinafter, also referred to as heater thermistor T3) constituting the heater temperature sensor is connected to the heater temperature detecting connector 240 via a heater temperature wiring 193 (see Figs. 7 and 8).

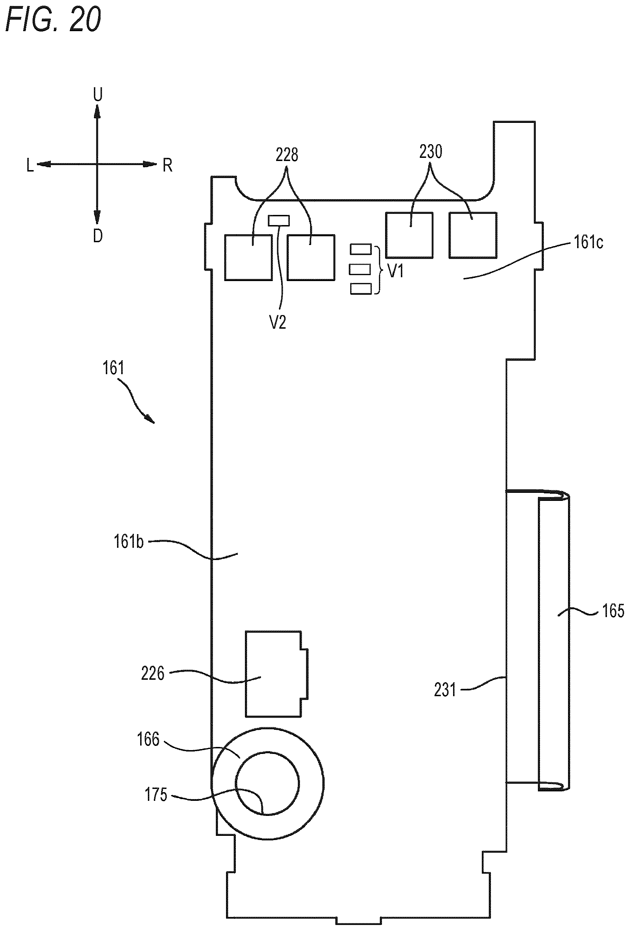

Fig. 20 is a view illustrating the secondary surface 161b of the MCU-mounted board 161. On the secondary surface 161b of the MCU-mounted board 161, the case temperature detecting connector 228 and the intake detecting connector 230 are disposed on the upper end portion 161c, and a motor connector 226 to which the vibration motor M is connected via a conductive wire is disposed on the upper side of the opening portion 175.

The thermistor T4 (hereinafter, also referred to as case thermistor T4) constituting the case temperature sensor is connected to the case temperature detecting connector 228 via a case temperature wiring 194 (see Fig. 7), and the thermistor T2 (hereinafter, also referred to as puff thermistor T2) constituting the intake sensor is connected to the intake detecting connector 230 via a puff wiring 192 (see Figs. 7 and 8).

As described above, three thermistor connectors (heater temperature detecting connector 240, case temperature detecting connector 228, and intake detecting connector 230) are disposed on the MCU-mounted board 161. On the other hand, the heater connector Cn is disposed on the receptacle-mounted board 162, and one thermistor connector (power supply temperature detecting connector 234) is disposed thereon. It should be noted that regarding the number of the thermistor connectors, a pair of a positive electrode and a negative electrode constitutes one thermistor connector.

As a result, the number of thermistor connectors disposed on the MCU-mounted board 161 is larger than the number of thermistor connectors disposed on the receptacle-mounted board 162. In order to improve detection accuracy of the thermistor, it is preferable to inhibit an influence of noise input to the thermistor connector as much as possible. By setting the number of the thermistor connectors disposed on the MCU-mounted board 161 to be larger than the number of the thermistor connectors disposed on the receptacle-mounted board 162 on which the heater connector Cn is disposed, the heater wiring, the heater temperature wiring 193, the case temperature wiring 194, and the puff wiring 192 are less likely to be entangled with one another. As a result, stress is less likely to be applied to each wiring, so that a stray capacity and a stray resistance of the wiring are reduced, and accuracy of the temperature detected using the thermistor can be improved.

As described above, on the receptacle-mounted board 162, the step-up DC/DC converter 9 is disposed on the secondary surface 162b. The step-up DC/DC converter 9 performs ON/OFF control of the built-in transistor to step up an input voltage and output the stepped-up voltage from the output terminal VOUT, and noise is likely to occur. Therefore, by disposing a large number of thermistor connectors on the MCU-mounted board 161 separated from the receptacle-mounted board 162 on which the step-up DC/DC converter 9 is disposed, noise is less likely to be mixed in an output value of the thermistor, and accuracy of control performed by the inhaler 100 is improved.

In order to improve the detection accuracy of the thermistor in this manner, it is preferable to separate the thermistor connector from the step-up DC/DC converter 9. In particular, it is important not to mix noise in an output value of the heater thermistor T3 which detects a heater temperature, which is the most important parameter in the inhaler 100. In the present embodiment, the heater temperature detecting connector 240 is disposed on the main surface 161a of the MCU-mounted board 161 so as to be distant from the secondary surface 162b of the receptacle-mounted board 162 on which the step-up DC/DC converter 9 is disposed. That is, the two circuit boards 161 and 162 are disposed such that a distance between the secondary surface 162b of the receptacle-mounted board 162 on which the step-up DC/DC converter 9 is disposed and the main surface 161a of the MCU-mounted board 161 on which the heater temperature detecting connector 240 is disposed is longer than a distance between the secondary surface 162b of the receptacle-mounted board 162 and the secondary surface 161b of the MCU-mounted board 161, in other words, the secondary surface 161b of the MCU-mounted board 161 faces the main surface 162a of the receptacle-mounted board 162.

Further, as described above, the battery connectors 222 and 224 are disposed on the receptacle-mounted board 162. A larger current flows through the battery connectors 222 and 224 than that through the thermistor connector. Therefore, by disposing a large number of thermistor connectors on the MCU-mounted board 161 separated from the receptacle-mounted board 162 on which the battery connectors 222 and 224 which may become a noise source are disposed, noise is less likely to be mixed in the output value of the thermistor, and the accuracy of the control performed by the inhaler 100 is improved.

In order to improve the detection accuracy of the thermistor in this manner, it is preferable to separate the thermistor connector from the battery connectors 222 and 224. In the present embodiment, the heater temperature detecting connector 240 is disposed on the main surface 161a of the MCU-mounted board 161 so as to be distant from the main surface 162a of the receptacle-mounted board 162 on which the battery connectors 222 and 224 are disposed.

The heater connector Cn, the heater temperature detecting connector 240, the case temperature detecting connector 228, and the intake detecting connector 230 are all disposed at the upper end portions 161c and 162c of the circuit boards 161 and 162. Therefore, by collecting these connectors on the upper end portions 161c and 162c of the circuit boards 161 and 162, connection work to the connectors can be facilitated, and further, the wiring is less likely to physically interfere with other electronic components on the board than when the wiring is connected to a position other than the end portion. As a result, stress is less likely to be applied to the electronic components, and durability of the inhaler 100 is improved. In particular, in the present embodiment, positions of the upper end portion 162c of the receptacle-mounted board 162 and the upper end portion 161c of the MCU-mounted board 161 are substantially the same, and the heater temperature detecting connector 240, the case temperature detecting connector 228, and the intake detecting connector 230 are disposed at substantially the same position. As a result, the connection work to the connectors can be further facilitated.

In order to avoid interference with other electronic components, these connectors may be disposed at the lower end portions of the circuit boards 161 and 162, but since the heater HTR, the heater thermistor T3, the case thermistor T4, and the puff thermistor T2 connected to these connectors are all disposed above the circuit boards 161 and 162, these connectors are preferably disposed at the upper end portions 161c and 162c of the circuit boards 161 and 162. Accordingly, since the heater wiring, the heater temperature wiring 193, the case temperature wiring 194, and the puff wiring 192 can be shortened, transmission loss can be reduced, and cost of the wiring can also be reduced while a total length of the inhaler 100 is shortened.

Among the heater temperature detecting connector 240, the case temperature detecting connector 228, and the intake detecting connector 230 disposed on the upper end portion 161c of the MCU-mounted board 161, the heater temperature detecting connector 240 is disposed on the main surface 161a, and the case temperature detecting connector 228 and the intake detecting connector 230 are disposed on the secondary surface 161b. As a result, while the heater temperature detecting connector 240, the case temperature detecting connector 228, and the intake detecting connector 230 are collected on the upper end portion 161c of the MCU-mounted board 161, an area of the board can be more effectively utilized than when the connectors are disposed only on one surface, so that the cost and size of the inhaler 100 can be reduced.

Here, when the heater temperature detecting connector 240 and other thermistor connectors (case temperature detecting connector 228 and intake detecting connector 230) are disposed on different surfaces of the same board, the heater temperature detecting connector 240 is preferably separated from the step-up DC/DC converter 9 as described above. In the present embodiment, the heater temperature detecting connector 240 is disposed on the main surface 161a of the MCU-mounted board 161 so as to be more distant from the secondary surface 162b of the receptacle-mounted board 162 on which the step-up DC/DC converter 9 is disposed than the other thermistor connectors. That is, the two circuit boards 161 and 162 are disposed such that a distance between the secondary surface 162b of the receptacle-mounted board 162 on which the step-up DC/DC converter 9 is disposed and the main surface 161a of the MCU-mounted board 161 on which the heater temperature detecting connector 240 is disposed is longer than a distance between the secondary surface 162b of the receptacle-mounted board 162 on which the step-up DC/DC converter 9 is disposed and the secondary surface 161b of the MCU-mounted board 161 on which the other thermistor connectors (case temperature detecting connector 228 and intake detecting connector 230) are disposed, in other words, the secondary surface 161b of the MCU-mounted board 161 faces the main surface 162a of the receptacle-mounted board 162. As a result, noise is less likely to be mixed in the output value of the heater thermistor T3.

On the secondary surface 161b of the MCU-mounted board 161 on which the case temperature detecting connector 228 and the intake detecting connector 230 are disposed, an electronic component V1 is preferably disposed between the case temperature detecting connector 228 and the intake detecting connector 230. The number of the electronic components may be one or more. In addition, the electronic component does not necessarily have to be disposed between the case temperature detecting connector 228 and the intake detecting connector 230, and an electronic component V2 may be disposed such that a distance (shortest distance) between the case temperature detecting connector 228 and the electronic component is shorter than a distance (shortest distance) between the case temperature detecting connector 228 and the intake detecting connector 230. As a result, the two thermistor connectors can be separated from each other, and wirings connected to the thermistor connectors are less likely to be entangled with each other, or noise generated in one thermistor connector is less likely to affect the other connector. In addition, the secondary surface 161b of the MCU-mounted board 161 can be effectively utilized. Therefore, stress is less likely to be applied to the wirings, and the accuracy of the temperature obtained from the thermistor is also improved. The electronic components V1 and V2 are preferably passive elements, for example, a resistor, a capacitor, an ESD suppressor, an EMI removal filter, and a varistor.

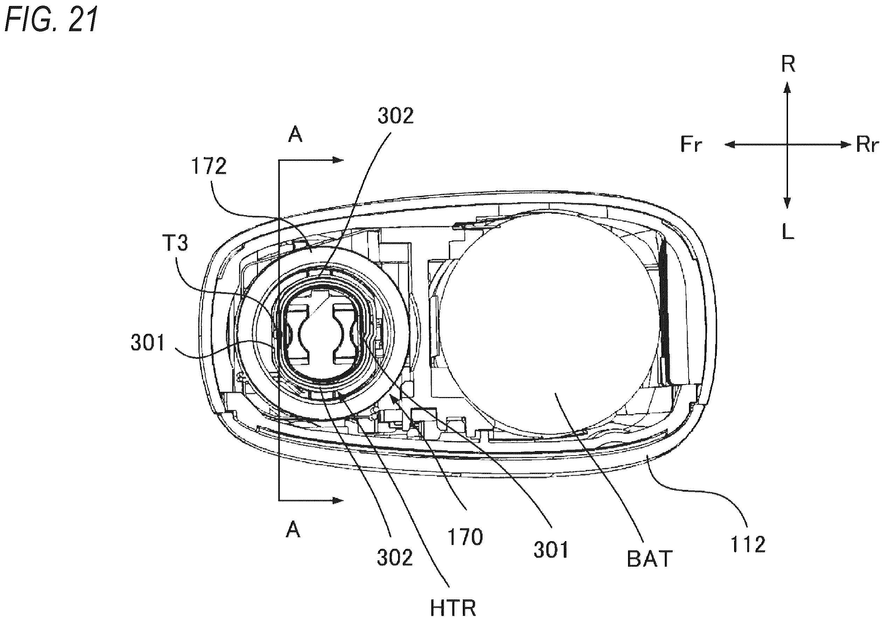

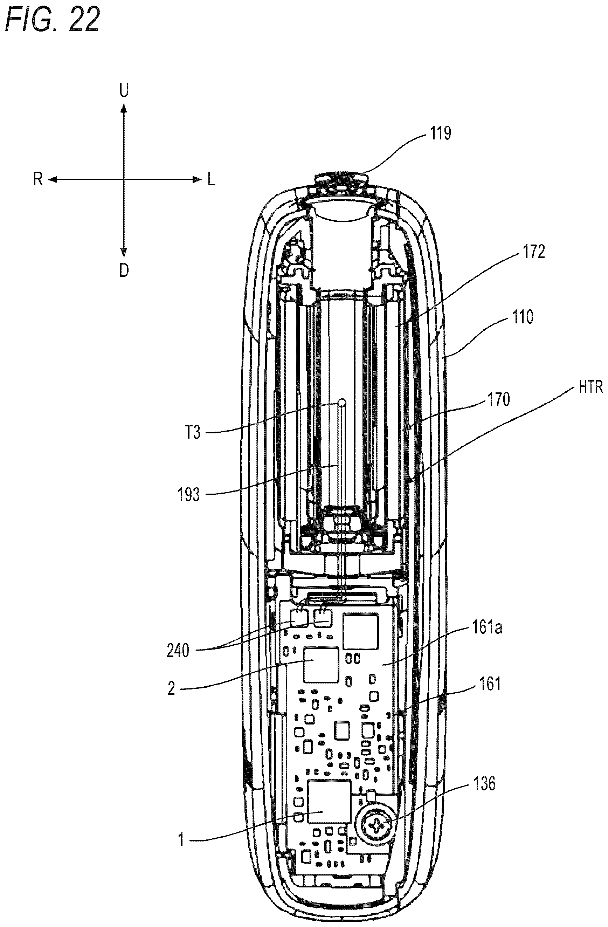

Fig. 21 is a cross-sectional view of the inhaler 100 taken along a horizontal plane passing through the heater thermistor T3, and Fig. 22 is a cross-sectional view of the inhaler 100 taken along a virtual plane indicated by A-A in Fig. 21.

As illustrated in Figs. 21 and 22, the heater thermistor T3 and the main surface 161a of the MCU-mounted board 161 on which the heater temperature detecting connector 240 is disposed are located on the virtual plane indicated by A-A in Fig. 21. Even when the main surface 161a of the MCU-mounted board 161 and the heater thermistor T3 are not on the same plane, the MCU-mounted board 161 is preferably closer to the heater temperature detecting connector 240 than the receptacle-mounted board 162. As described above, the MCU-mounted board 161 on which the heater temperature detecting connector 240 is disposed is disposed closer to the heater temperature detecting connector 240 than the receptacle-mounted board 162, and the main surface 161a of the MCU-mounted board 161 on which the heater temperature detecting connector 240 is disposed is disposed on the same plane as the heater thermistor T3, whereby the heater temperature wiring 193 can be shortened, and the transmission loss can be reduced. Accordingly, accuracy of a heater temperature detected using the heater thermistor T3 can be improved. In addition, the cost of the inhaler 100 can be reduced.

The heater temperature wiring 193 is preferably shorter than other wirings connecting the thermistor and the thermistor connector. In the present embodiment, the heater temperature wiring 193 is shorter than the case temperature wiring 194 and the puff wiring 192. Here, when lengths of the wirings connecting the thermistor and the thermistor connector are different between the positive electrode and the negative electrode, the longer length thereof is used. In the present embodiment, the heater temperature wiring 193 is shorter than the case temperature wiring 194 and the puff wiring 192. In other words, the heater temperature wiring 193 is the shortest among the thermistor wirings connected to the MCU 1 via a conductive pattern of the MCU-mounted board 161. By shortening the heater temperature wiring 193 which connects the heater temperature detecting connector 240 and the heater thermistor T3 for acquiring the heater temperature, which is the most important parameter in the inhaler 100, the stray capacity and the stray resistance of the wiring can be reduced. Accordingly, it is possible to acquire the temperature of the heater HTR with high accuracy while enhancing the function of the inhaler 100 using the plurality of thermistors.

As illustrated in Fig. 21, an outer peripheral portion of the heater HTR has an oval shape in a cross-sectional view. More specifically, the outer peripheral portion of the heater HTR includes two flat portions 301 facing each other and two semicircular portions 302 connecting the two flat portions 301. The heater thermistor T3 is bonded to one of the two flat portions 301. Therefore, the heater thermistor T3, and the heater HTR which is a target of temperature measurement can be firmly bonded to each other. Accordingly, even when an impact is applied to the inhaler 100, the heater thermistor T3 is less likely to fall off, and the durability of the inhaler 100 can be improved.

An inner peripheral portion of the heater HTR also has an oval shape, and a gap between the two flat portions is smaller than a diameter of the rod 500. As a result, since a contact area between the rod 500 and the heater HTR is increased, heat is easily transferred to the rod 500, and efficiency of aerosol generation is improved. The inner peripheral portion of the heater HTR may be formed into an elliptical shape by changing the flat portion of the inner peripheral portion of the heater HTR into a shape having a small curvature.

Although various embodiments have been described above with reference to the drawings, it is needless to say that the present invention is not limited to these examples. It is apparent to those skilled in the art that various changes and modifications may be conceived within the scope described in the claims, and it is understood that the changes and the modifications naturally fall within the technical scope of the present invention. In addition, the components described in the above embodiments may be optionally combined without departing from the spirit of the invention.

For example, in the above-described embodiment, only the power supply temperature detecting connector 234 among the thermistor connectors is disposed on the receptacle-mounted board 162, but the power supply temperature detecting connector 234 may be disposed on the MCU-mounted board 161. In this case, four thermistor connectors (heater temperature detecting connector 240, case temperature detecting connector 228, intake detecting connector 230, and power supply temperature detecting connector 234) are disposed on the MCU-mounted board 161. On the other hand, no thermistor connector is disposed on the receptacle-mounted board 162.

As described above, since the heater connector Cn is disposed only on the receptacle-mounted board 162 of the MCU-mounted board 161 and the receptacle-mounted board 162, and the thermistor connector is disposed only on the MCU-mounted board 161, the heater wiring, the heater temperature wiring 193, the case temperature wiring 194, and the puff wiring 192 are less likely to be entangled with each other. As a result, stress is less likely to be applied to each wiring, so that a stray capacity and a stray resistance of the wiring are reduced, and accuracy of the temperature detected using the thermistor can be improved. In addition, since the stress applied to each wiring is reduced, durability of the power supply unit for the aerosol generating device is improved. In addition, the connection work to the connectors can be facilitated.

In the present description, at least the following matters are described. Corresponding constituent components and the like in the above-mentioned embodiment are shown in parentheses, but the present invention is not limited thereto.
(1) A power supply unit (non-combustion inhaler 100) for an aerosol generating device, including:
   a power supply (power supply BAT);
   a heater connector (heater connector Cn) connected to a heater (heater HTR) configured to heat an aerosol source by consuming power supplied from the power supply;
   thermistors (power supply thermistor T1, puff thermistor T2, heater thermistor T3, and case thermistor T4);
   thermistor connectors (power supply temperature detecting connector 234, intake detecting connector 230, heater temperature detecting connector 240, and case temperature detecting connector 228) connected to the thermistors;
   a first circuit board (MCU-mounted board 161); and
   a second circuit board (receptacle-mounted board 162) separate from the first circuit board, in which:
      the heater connector is disposed on the second circuit board of the first circuit board and the second circuit board; and
      the number of the thermistor connectors disposed on the first circuit board is larger than the number of the thermistor connectors disposed on the second circuit board.
   According to (1), the number of the thermistor connectors disposed on another circuit board is larger than the number of the thermistor connectors disposed on the board on which the heater connector is disposed, so that a wiring connecting the heater connector and the heater and a wiring connecting the thermistor connector and the thermistor are less likely to be entangled. As a result, stress is less likely to be applied to each wiring, so that a stray capacity and a stray resistance of the wiring are reduced, and accuracy of the temperature detected using the thermistor can be improved. In addition, since the stress applied to each wiring is reduced, durability of the power supply unit for the aerosol generating device is improved. In addition, the connection work to the connectors can be facilitated.
(2) The power supply unit for an aerosol generating device according to (1), in which:
   each of the first circuit board and the second circuit board has a shape extending in a predetermined direction (up-down direction);
   a first thermistor connector (heater temperature detecting connector 240) disposed on the first circuit board is disposed on an end portion (upper end portion 161c) of the first circuit board on one side in the predetermined direction; and
   the heater connector is disposed on an end portion (upper end portion 162c) of the second circuit board on the one side in the predetermined direction.
   According to (2), by collecting the first thermistor connector and the heater connector on the end portion on the one side, connection work to the connectors can be facilitated, and further, the wiring is less likely to physically interfere with other electronic components on the board than in a case where the wiring is connected to a position other than the end portion. As a result, stress is less likely to be applied to the electronic components, and the durability of the power supply unit for the aerosol generating device is improved.
(3) The power supply unit for an aerosol generating device according to (2), further including:
   the heater, in which
   the heater and a first thermistor (heater thermistor T3) connected to the first thermistor connector are provided on the one side (upper side) in the predetermined direction with respect to the first circuit board and the second circuit board.
   According to (3), the wiring connecting the heater and the heater connector and the wiring connecting the thermistor and the thermistor connector can be shortened, so that transmission loss can be reduced. Accordingly, more power can be supplied to the heater, and the accuracy of the temperature detected using the thermistor can be improved. In addition, cost of wiring can also be reduced while a total length of the aerosol generating device is shortened.
(4) The power supply unit for an aerosol generating device according to (3), in which
   the first circuit board is closer to the first thermistor than the second circuit board.
   According to (4), the wiring connecting the thermistor and the thermistor connector can be shortened, so that the transmission loss can be reduced. Accordingly, the accuracy of the temperature detected using the thermistor can be improved. In addition, cost of the power supply unit for the aerosol generating device can be reduced.
(5) The power supply unit for an aerosol generating device according to (3) or (4), in which:
   the first circuit board includes a main surface (main surface 161a) on which the first thermistor connector (heater temperature detecting connector 240) is disposed; and
   the first thermistor is located on a virtual plane including the main surface.
   According to (5), the wiring connecting the thermistor and the thermistor connector can be shortened, so that the transmission loss can be reduced. Accordingly, the accuracy of the temperature detected using the thermistor can be improved. In addition, cost of the power supply unit for the aerosol generating device can be reduced.
(6) The power supply unit for an aerosol generating device according to any of (2) to (5), further including:
   the heater, in which:
   an outer peripheral portion of the heater has an oval shape including two flat portions (flat portions 301) and two semicircular portions (semicircular portions 302); and
   a first thermistor (heater thermistor T3) connected to the first thermistor connector is bonded to one of the two flat portions.
   According to (6), the thermistor and the heater which is a target of temperature measurement can be firmly bonded to each other. Accordingly, even when an impact is applied to the power supply unit for the aerosol generating device, the thermistor is less likely to fall off, and the durability of the power supply unit for the aerosol generating device can be improved.
(7) The power supply unit for an aerosol generating device according to (6), in which
   an inside of the heater has an elliptical shape.
   According to (7), a contact area between the aerosol source and the heater can be improved as compared with a case of a circular shape, so that heat is easily transferred to the aerosol source and the efficiency of aerosol generation is improved.
(8) The power supply unit for an aerosol generating device according to any of (1) to (7), further including:
   a switching regulator (step-up DC/DC converter 9) including an input terminal (input terminal VIN) connected to the power supply and an output terminal (output terminal VOUT) connected to the heater connector, in which:
   the switching regulator is configured to convert, from the output terminal, an input voltage and be capable of outputting the converted voltage; and
   the switching regulator is disposed on the second circuit board.
   According to (8), by increasing the number of thermistor connectors disposed on the circuit board away from the switching regulator which may become a noise source, noise is less likely to be mixed in an output value of the thermistor. Accordingly, the accuracy of the temperature detected using the thermistor is improved, and accuracy of control performed by the power supply unit for the aerosol generating device is improved.
(9) The power supply unit for an aerosol generating device according to (8), further including:
   the heater, in which:
   a first thermistor (heater thermistor T3) connected to a first thermistor connector (heater temperature detecting connector 240) disposed on the first circuit board is bonded to or close to the heater;
   the first circuit board includes a first surface (main surface 161a) on which the first thermistor connector is disposed and a second surface (secondary surface 161b) which is a back surface of the first surface;
   the second circuit board includes a first surface (secondary surface 162b) on which the switching regulator is disposed and a second surface (main surface 162a) which is a back surface of the first surface; and
   a distance between the first surface (secondary surface 162b) of the second circuit board and the first surface (main surface 161a) of the first circuit board is longer than a distance between the second surface (main surface 162a) of the second circuit board and the second surface (secondary surface 161b) of the first circuit board.
   According to (9), the first thermistor connector can be separated from the switching regulator, so that noise is less likely to be mixed in the output value of the thermistor. Accordingly, the accuracy of the temperature detected using the thermistor is improved, and accuracy of control performed by the power supply unit for the aerosol generating device is improved.
(10) The power supply unit for an aerosol generating device according to (8), further including:
   the heater, in which:
   a first thermistor (heater thermistor T3) connected to a first thermistor connector (heater temperature detecting connector 240) disposed on the first circuit board is bonded to or close to the heater;
   the first circuit board includes a first surface (main surface 161a) on which the first thermistor connector is disposed and a second surface (secondary surface 161b) which is a back surface of the first surface;
   the second circuit board includes a first surface (secondary surface 162b) on which the switching regulator is disposed and a second surface (main surface 162a) which is a back surface of the first surface; and
   the second surface (secondary surface 161b) of the first circuit board faces the second surface (main surface 162a) of the second circuit board.
   According to (10), the first thermistor connector can be separated from the switching regulator, so that noise is less likely to be mixed in the output value of the thermistor. Accordingly, the accuracy of the temperature detected using the thermistor is improved, and accuracy of control performed by the power supply unit for the aerosol generating device is improved.
(11) The power supply unit for an aerosol generating device according to any of (1) to (10), further including:
   a power supply connector (battery connectors 222 and 224) connected to the power supply, in which
   the power supply connector is disposed on the second circuit board.
   According to (11), by moving the first thermistor connector away from the power supply connector which may become a noise source due to a flow of a large current, noise is less likely to be mixed in the output value of the thermistor. Accordingly, the accuracy of the temperature detected using the thermistor is improved, and accuracy of control performed by the power supply unit for the aerosol generating device is improved.
(12) The power supply unit for an aerosol generating device according to any of (2) to (7), in which:
   a second thermistor connector (intake detecting connector 230) different from the first thermistor connector is disposed on the first circuit board; and
   the second thermistor connector is disposed on the end portion (upper end portion 161c) of the first circuit board on the one side in the predetermined direction.
   According to (12), by collecting the first thermistor connector and the second thermistor connector on the end portion on the one side, connection work to the connectors can be facilitated, and further, the wiring is less likely to physically interfere with other electronic components on the board than in a case where the wiring is connected to a position other than the end portion. As a result, stress is less likely to be applied to the electronic components, and the durability of the power supply unit for the aerosol generating device is improved.
(13) The power supply unit for an aerosol generating device according to (12), in which:
   a third thermistor connector (case temperature detecting connector 228) different from the first thermistor connector and the second thermistor connector is disposed on the first circuit board;
   the third thermistor connector is disposed on the end portion (upper end portion 161c) of the first circuit board on the one side in the predetermined direction; and
   the second thermistor connector and the third thermistor connector are disposed on a surface (secondary surface 161b) different from a surface (main surface 161a) of the first circuit board on which the first thermistor connector is disposed.
   According to (13), the first to third thermistor connectors can be collected on the end portion of the first circuit board on the one side, and an area of the board can be more effectively utilized than in a case where the first to third thermistor connectors are disposed only on one surface, so that the cost and size of the power supply unit for the aerosol generating device can be reduced.
(14) A power supply unit for an aerosol generating device, including:
   a power supply (power supply BAT);
   a heater connector (heater connector Cn) connected to a heater (heater HTR) configured to heat an aerosol source by consuming power supplied from the power supply;
   a thermistor (power supply thermistor T1, puff thermistor T2, heater thermistor T3, and case thermistor T4);
   a thermistor connector (power supply temperature detecting connector 234, intake detecting connector 230, heater temperature detecting connector 240, and case temperature detecting connector 228) connected to the thermistor;
   a first circuit board (MCU-mounted board 161); and
   a second circuit board (receptacle-mounted board 162) separate from the first circuit board, in which:
      the thermistor connector is disposed only on the first circuit board of the first circuit board and the second circuit board; and
      the heater connector is disposed only on the second circuit board of the first circuit board and the second circuit board.
   According to (14), the heater connector and the thermistor connector are not mounted on the same board, so that the wiring connecting the heater and the heater connector and the wiring connecting the thermistor and the thermistor connector are less likely to be entangled. As a result, stress is less likely to be applied to each wiring, so that a stray capacity and a stray resistance of the wiring are reduced, and accuracy of the temperature detected using the thermistor can be improved. In addition, since the stress applied to each wiring is reduced, durability of the power supply unit for the aerosol generating device is improved. In addition, the connection work to the connectors can be facilitated.

The present application is based on the Japanese patent application (Japanese Patent Application No. 2021-079896) filed on May 10, 2021, and contents thereof are incorporated herein by reference.

### REFERENCE SIGNS LIST

9: step-up DC/DC converter (switching regulator)
100: non-combustion inhaler (power supply unit for aerosol generating device)
161: MCU-mounted board (first circuit board)
161a: main surface (first surface)
161b: secondary surface (second surface)
161c: upper end portion (end portion of first circuit board on one side)
162: receptacle-mounted board (second circuit board)
162a: main surface (second surface)
162b: secondary surface (first surface)
162c: upper end portion (end portion of second circuit board on one side)
222: positive-electrode-side battery connector (power supply connector)
224: negative-electrode-side battery connector (power supply connector)
228: case temperature detecting connector (third thermistor connector)
230: intake detecting connector (second thermistor connector)
234: power supply temperature detecting connector
240: heater temperature detecting connector (first thermistor connector)
301: flat portion
302: semicircular portion
BAT: power supply
HTR: heater
Cn: heater connector
T1: power supply thermistor (thermistor)
T2: puff thermistor (thermistor)
T3: heater thermistor (first thermistor)
T4: case thermistor (thermistor)
VIN: input terminal
VOUT: output terminal

## Claims

1. A power supply unit for an aerosol generating device, comprising:
a power supply;
a heater connector connected to a heater configured to heat an aerosol source by consuming power supplied from the power supply;
thermistors;
thermistor connectors connected to the thermistors;
a first circuit board; and
a second circuit board separate from the first circuit board, wherein:
the heater connector is disposed on the second circuit board of the first circuit board and the second circuit board; and
the number of the thermistor connectors disposed on the first circuit board is larger than the number of the thermistor connectors disposed on the second circuit board.

2. The power supply unit for an aerosol generating device according to claim 1, wherein:
each of the first circuit board and the second circuit board has a shape extending in a predetermined direction;
a first thermistor connector disposed on the first circuit board is disposed on an end portion of the first circuit board on one side in the predetermined direction; and
the heater connector is disposed on an end portion of the second circuit board on the one side in the predetermined direction.

3. The power supply unit for an aerosol generating device according to claim 2, further comprising:
the heater, wherein
the heater and a first thermistor connected to the first thermistor connector are provided on the one side in the predetermined direction with respect to the first circuit board and the second circuit board.

4. The power supply unit for an aerosol generating device according to claim 3, wherein
the first circuit board is closer to the first thermistor than the second circuit board.

5. The power supply unit for an aerosol generating device according to claim 3 or 4, wherein:
the first circuit board includes a main surface on which the first thermistor connector is disposed; and
the first thermistor is located on a virtual plane including the main surface.

6. The power supply unit for an aerosol generating device according to any of claims 2 to 5, further comprising:
the heater, wherein:
an outer peripheral portion of the heater has an oval shape including two flat portions and two semicircular portions; and
a first thermistor connected to the first thermistor connector is bonded to one of the two flat portions.

7. The power supply unit for an aerosol generating device according to claim 6, wherein
an inside of the heater has an elliptical shape.

8. The power supply unit for an aerosol generating device according to any of claims 1 to 7, further comprising:
a switching regulator including an input terminal connected to the power supply and an output terminal connected to the heater connector, wherein:
the switching regulator is configured to convert, from the output terminal, an input voltage and be capable of outputting the converted voltage; and
the switching regulator is disposed on the second circuit board.

9. The power supply unit for an aerosol generating device according to claim 8, further comprising:
the heater, wherein:
a first thermistor connected to a first thermistor connector disposed on the first circuit board is bonded to or close to the heater;
the first circuit board includes a first surface on which the first thermistor connector is disposed and a second surface which is a back surface of the first surface;
the second circuit board includes a first surface on which the switching regulator is disposed and a second surface which is a back surface of the first surface; and
a distance between the first surface of the second circuit board and the first surface of the first circuit board is longer than a distance between the first surface of the second circuit board and the second surface of the first circuit board.

10. The power supply unit for an aerosol generating device according to claim 8, further comprising:
the heater, wherein:
a first thermistor connected to a first thermistor connector disposed on the first circuit board is bonded to or close to the heater;
the first circuit board includes a first surface on which the first thermistor connector is disposed and a second surface which is a back surface of the first surface;
the second circuit board includes a first surface on which the switching regulator is disposed and a second surface which is a back surface of the first surface; and
the second surface of the first circuit board faces the second surface of the second circuit board.

11. The power supply unit for an aerosol generating device according to any of claims 1 to 10, further comprising:
a power supply connector connected to the power supply, wherein
the power supply connector is disposed on the second circuit board.

12. The power supply unit for an aerosol generating device according to any of claims 2 to 7, wherein:
a second thermistor connector different from the first thermistor connector is disposed on the first circuit board; and
the second thermistor connector is disposed on the end portion of the first circuit board on the one side in the predetermined direction.

13. The power supply unit for an aerosol generating device according to claim 12, wherein:
a third thermistor connector different from the first thermistor connector and the second thermistor connector is disposed on the first circuit board;
the third thermistor connector is disposed on the end portion of the first circuit board on the one side in the predetermined direction; and
the second thermistor connector and the third thermistor connector are disposed on a surface different from a surface of the first circuit board on which the first thermistor connector is disposed.

14. A power supply unit for an aerosol generating device, comprising:
a power supply;
a heater connector connected to a heater configured to heat an aerosol source by consuming power supplied from the power supply;
a thermistor;
a thermistor connector connected to the thermistor;
a first circuit board; and
a second circuit board separate from the first circuit board, wherein:
the thermistor connector is disposed only on the first circuit board of the first circuit board and the second circuit board; and
the heater connector is disposed only on the second circuit board of the first circuit board and the second circuit board.
